(19)

Europäisches Patentamt
European Patent Office
Office européen des brevets

(11)  EP 3 371 104 B1

(12)  **EUROPEAN PATENT SPECIFICATION**

(45) Date of publication and mention
of the grant of the patent:
**07.08.2019   Bulletin 2019/32**

(51) Int Cl.:
*C01G 23/00* (2006.01)          *C01G 23/047* (2006.01)
*C01G 23/053* (2006.01)

(21) Application number: **16778025.3**

(22) Date of filing: **07.10.2016**

(86) International application number:
**PCT/EP2016/073964**

(87) International publication number:
**WO 2017/060407 (13.04.2017 Gazette 2017/15)**

(54) **DIRECT SYNTHESIS OF CARBON DOPED TIO2-BRONZE NANOSTRUCTURES AS ANODE MATERIALS FOR HIGH PERFORMANCE LITHIUM BATTERIES**

DIREKTSYNTHESE VON KOHLENSTOFFDOTIERTEN TIO2-BRONZENANOSTRUKTUREN ALS ANODENMATERIALIEN FÜR HOCHLEISTUNGSFÄHIGE LITHIUMBATTERIEN

SYNTHÈSE DIRECTE DE NANOSTRUCTURES DE TIO2-BRONZE DOPÉES AU CARBONE UTILISÉES COMME MATÉRIAUX D'ANODE POUR BATTERIES AU LITHIUM HAUTE PERFORMANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **08.10.2015   US 201562238756 P**

(43) Date of publication of application:
**12.09.2018   Bulletin 2018/37**

(73) Proprietor: **Fondazione Istituto Italiano di Tecnologia
16163 Genova (IT)**

(72) Inventors:
• **CAPIGLIA, Claudio
Takatsuki
Osaka 569-1046 (JP)**
• **PROIETTI ZACCARIA, Remo
16014 Ceranesi (GE) (IT)**
• **GORIPARTI, Subrahmanyam
16162 Genova (IT)**
• **MIELE, Ermanno
83047 Lioni (AV) (IT)**
• **DE ANGELIS, Francesco
16167 Genova (IT)**

(74) Representative: **Rambelli, Paolo et al
Jacobacci & Partners S.p.A.
Corso Emilia 8
10152 Torino (IT)**

(56) References cited:
**EP-A1- 2 592 050          WO-A1-2013/139174
US-A1- 2014 120 418**

• **SUBRAHMANYAM GORIPARTI ET AL: "Direct Synthesis of Carbon-Doped TiO 2 -Bronze Nanowires as Anode Materials for High Performance Lithium-Ion Batteries", ACS APPLIED MATERIALS AND INTERFACES, vol. 7, no. 45, 23 October 2015 (2015-10-23), pages 25139-25146, XP055321155, US ISSN: 1944-8244, DOI: 10.1021/acsami.5b06426**
• **XU ET AL: "Preparation and electrochemical properties of carbon-doped TiO2 nanotubes as an anode material for lithium-ion batteries", JOURNAL OF POWER SOURCES, ELSEVIER SA, CH, vol. 175, no. 2, 11 October 2007 (2007-10-11), pages 903-908, XP022378969, ISSN: 0378-7753, DOI: 10.1016/J.JPOWSOUR.2007.10.014 cited in the application**

**Description**

<u>**INTRODUCTION**</u>

Titanium dioxide ($TiO_2$) is a promising anode material for lithium ion batteries (LIBs) due to high abundance of titanium, low cost and low toxicity.[1-5] In addition, the reactions of $TiO_2$ with lithium ions through an intercalation/de-intercalation mechanism result in remarkable reversible capacity, high chemical/thermal stability, and small volume expansion.[5-9] Furthermore, the usual formation of solid electrolyte interface (SEI), typical of anodes based on graphite, nowadays the most commonly used anode material, is absent in $TiO_2$ based materials owing to their high operational potential (> 1 V vs $Li^+/Li$).[5-7] All these reasons together make $TiO_2$ based anodes promising candidates for high power applications such as electric vehicles, hybrid electric vehicles and smart grids.[5, 10-13]

Various types of $TiO_2$ polymorphs (anatase, rutile, brookite and bronze) have been investigated as active anode materials for LIBs.[5, 14-18] Among them, TiO2-Bronze (TB) has the highest capacity (335 mAh g$^{-1}$)[19-22] and additionally it undergoes pseudo-capacitive charging (due to adsorption of $Li^+$ at the TB surface and near surface region with a $Ti^{+3}/Ti^{+4}$ redox reaction), which allows for higher cycling rates.[19, 23-25] On the other hand, the low electric and ionic conductivity within $TiO_2$ polymorphs have prevented the manufacturing of $TiO_2$-based LIBs as high rate anode electrodes.

To overcome these issues, nanostructuring of $TiO_2$ has been proposed.[1, 3, 26-28] In particular, one-dimension (ID) nano-architectures such as nanowires, nanotubes, nanorods and nanofibers have shown direct and rapid ion/electron transport, better compliance to lithiation induced stresses and short Li-ion diffusion length compared to other kinds of nanostructures.[29-32] A further approach to improve the electrochemical performance of anode materials utilizes carbon coating and/or carbonaceous composites. For instance, 3D cross-linked $TiO_2$ nanoweb/nanofibers,[33] ID TB nanowires,[34] nanotubes[21] and nanorods,[35,36] both carbon coated and combined with reduced graphene oxide, have been proposed. However, the conductivity enhancement from carbon coating involves heat treatment at high-temperatures, which is not suitable for TB. Indeed, phase transformation to anatase and/or rutile may occur during the heat treatment. Furthermore, the use of conductive additives positively affects the electron transport but only on the surface of active electrode materials, while leaving unaltered the intrinsic electrical conductivity of $TiO_2$. To overcome this limitation, it was shown that doping $TiO_2$ with metal/non-metal impurity atoms can improve its intrinsic electrical conductivity, and this leads to better lithium battery performance in terms of energy density and rate capability. In addition, doping enhances the lithium diffusion through hopping of electrons from $Ti^{3+}$ sites with low valence states to $Ti^{4+}$ sites with high valence states.[37] In particular, $TiO_2$ doped with metal heteroatoms such as Sn, Mo, Cr, Nb, Mn, Fe, Ni and non-metal heteroatoms like N, C, S were prepared and studied as electrodes for LIBs.[22, 38-45] Recently, Kim et al.[46] and in a similar fashion Li et al.[47] improved lithium battery performance by using ID $TiO_2$ nanostructures with nitrogen doping. These results suggest that ID TB nanostructures, if doped with suitable heteroatoms, can lead to improved lithium battery performance in terms of both capacity and rate capability even though only few reports exist on this theme.[48-50]

<u>Summary of the invention</u>

An object of the invention is to provide a simple and inexpensive synthesis procedure capable of producing nanostructures doped with heteroatoms, as defined in the appended claims.

A specific object of the invention is to provide C-doped Titanium bronze nanowires for use in Li-ion batteries as anode material.

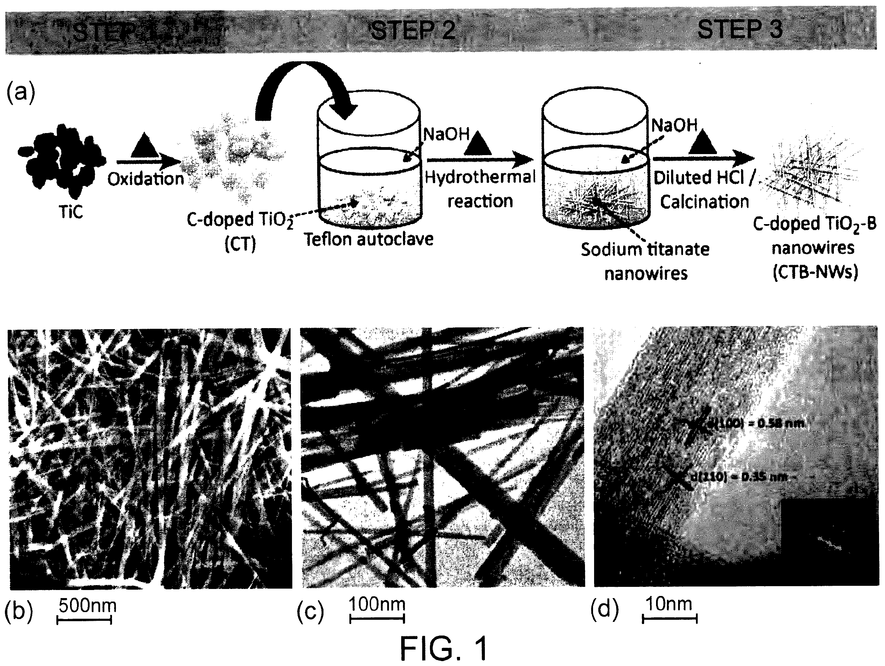

The general conditions of the process of the invention are defined in the appended claims. A specific embodiment of the invention is the direct synthesis of carbon doped TB nanowires (CTB-NWs), starting from titanium carbide (TiC), *via* a simple hydrothermal procedure. The synthesis procedure comprises three steps, as illustrated in Figurela. TiC was used as precursor material for the primary oxidation process, which resulted in micro sized C-doped $TiO_2$ particles (Step 1). Subsequently, micrometer-long nanowires were formed through a hydrothermal reaction in alkaline media (Step 2). The synthesis was then followed by proton exchange with diluted HCl and calcination (Step 3) resulting in the formation of CTB-NWs (see Figures 1b-d).

<u>Brief description of the drawings</u>

Figure 1. (a) Schematic illustration describing the preparation of CTB-NWs starting from TiC precursor. (b) High resolution SEM image of CTB-NWs. (c) TEM image of CTB-NWs, and (d) high resolution TEM image of single CTB-NW. The inset in (d) represents the Fast Fourier Transfer (FFT) of the CTB-NWs crystal structure.

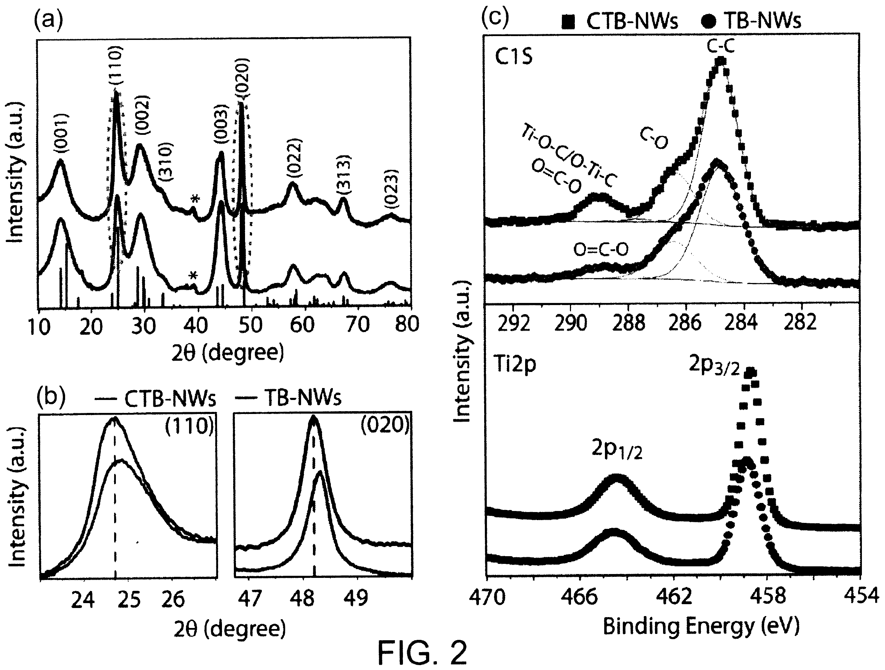

Figure 2. (a) X-ray diffraction pattern of CTB nanowires and TB nanowires. The asterisks represent the anatase peak. ICDD card 046-1237. (b) Zoom of the peaks (110) and (020) (highlighted by green dashed line in (a)). (c) Deconvoluted XPS spectra of (left) C Is, (right) Ti 2p bands of CTB-NWs and TB- NWs.

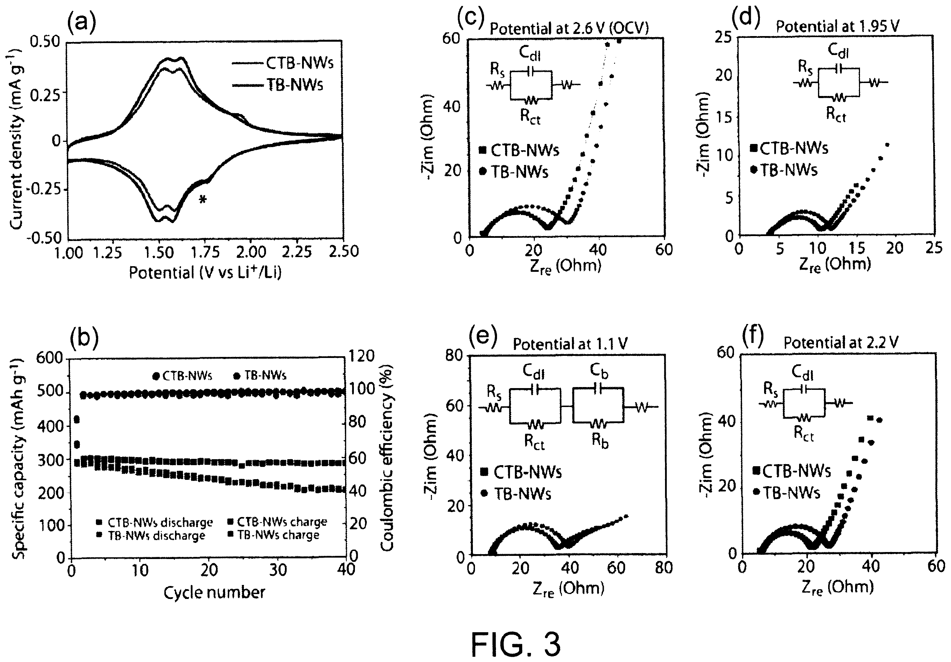

Figure 3. Electrochemical characterization of CTB-NWs and TB-NWs. (a) Cyclic voltammograms; (b) Galvanostatic charge-discharge cycling profile at the current rate of 0.1C; The Nyquist plots of electrochemical impedance spectroscopy measurements at different potentials (c) 2.6 V (OCV); (d) 1.95 V (partial lithiation); (e) 1.1V (complete lithiation) and (f) 2.2 V (complete de-lithiation) vs Li+/Li. For (c) to (f) the corresponding electrical circuits are shown.

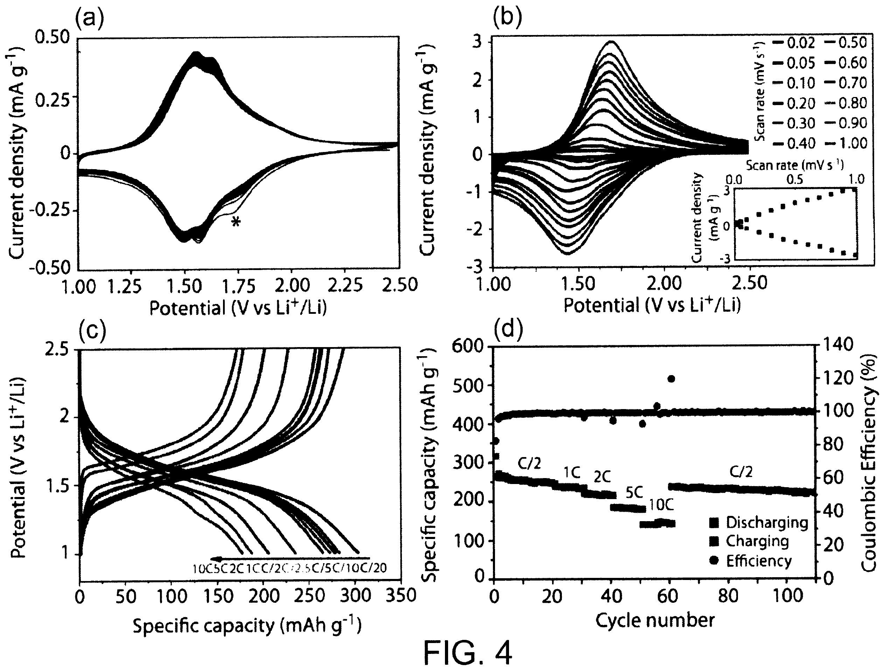

Figure 4. Electrochemical performance of CTB-NWs. (a) Cyclic voltammograms of first 50 cycles at scan rate of $0.1 mV s^{-1}$. (b) Cyclic voltammograms at different scan rates $(mV s^{-1})$. Inset: scan rate vs current density. (c) Galvanostatic charging-discharging profile at various current rates (from C/20 to 10C). (d) capacity retention at current rates between C/2 and 10C.

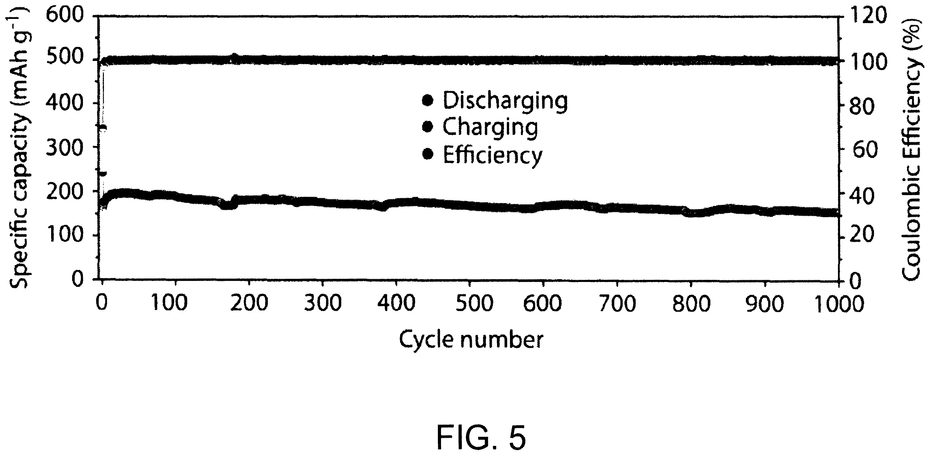

Figure 5. Long-term cycling performance of CTB-NWs is displayed at a currents rate of 10C. An efficiency of 100% together with a slow decaying specific capacity (charge and discharge) are shown. After 1000 cycles, the specific capacity had decayed of 19%.

Figure S1. SEM images of (a) TiC, (b) C-doped $TiO_2$, (c) Sodium titanate nanowires.

Figure S2. SEM image of undoped $TiO_2$-Bronze (TB-NWs) nanowires.

Figure S3. X-ray diffraction pattern of (i) TiC, (ii) C-doped $TiO_2$, (iii) C-doped $Na_2Ti_9O_{19}$, (iv) C-doped $H_2Ti_8O_{17}$ and (v) CTB nanowires. The asterisk represents the anatase peak.

Figure S4. Raman spectra of both CTB-NWs and TB-NWs.

Figure S5. XPS spectra of C1s and Ti2p bands for TiC (black), C-doped $TiO_2$ (blue) and CTB nanowires (red).

Figure S6. UV-Vis absorbance measured for CTB-NWs (Black line) and TB-NWs (Red line).

Figure S7. $Z_{Re}$ vs $\omega^{-1/2}$ as obtained from the Nyquist plots at (a) OCV and (b) 1.95 V for CTB-NWs. (Black line) and TB-NWs (Red line).

Figure S8. Galvanostatic cycling performance of carbon doped TB nanowires (CTB-NWs) at currents rates (i) C/2, (ii) I C and (iii) 5 C (therein, 1 C = 335 mAh $g^{-1}$).

Figure S9. Specific capacity and Columbic efficiency of undoped $TiO_2$-B nanowires (TB-NWs).

## EXPERIMENTAL SECTION

**Materials.** Titanium carbide (TiC) from MaTecK Material-Technologie & Kristalle GmbH, Germany, sodium hydroxide (NaOH), Hydrochloric acid, Millipore water. All chemical were used further purification.

**Preparation of nanowires of C-doped $TiO_2$-Bronze.** The preparation of nanowires of C-doped $TiO_2$-B followed a multi-step procedure. The first step was the complete oxidation (in air atmosphere) of TiC resulting into C-doped $TiO_2$ at 500 °C for 5 hours. Afterwards, the nanowires of C-doped TB were synthesized under hydrothermal route in alkaline solution, i.e. 10M NaOH. In particular, 0.2 grams of C-doped $TiO_2$ were dispersed in 20 ml of 10M NaOH solution under continuous stirring, then this solution was transferred to Teflon lined autoclave and reacted at 160 °C for 48 hours. The obtained product was washed 3 times with Millipore water through centrifugation, followed by 3 times washing in 0.1M HCl solution and 6 times washing with Millipore water. Finally, it was washed with ethanol then dried under vacuum at 40 °C overnight. The resulted product was heat treated at 300 °C for 120 minutes at a heat rate of 2 °C per minute, yielding to a white powder, i.e. CTB nanowires.

**Material Characterization.** The powder X-ray diffraction patterns were recorded on a Rigaku SmartLab 9 kW diffractometer equipped with Cu K$\alpha$ X-ray source operated at 40 kV and 150 mA. Transmission electron microscopy images were obtained using a JEOL JEM 1011 (Jeol, Tokyo Japan) operating at 100 kV acceleration voltage, equipped with a W thermionic electron source and a FEI TECNAI G2 F20 instrument, equipped with a Schottky field emission gun (FEG), operating at 200 kV acceleration voltage. High resolution scanning electron microscopy images were obtained using a JEOL JSM 7500FA (Jeol, Tokyo, Japan) equipped with a cold FEG, operating at 15 kV acceleration voltage. Raman spectroscopy measurements were carried out with Renishaw in Via Micro Raman equipped with laser source at 785 nm through a 50x objective (LEICA N PLAN EPI 50/0.75). X-ray photoelectron spectroscopy (XPS) analysis was performed on a Kratos Axis Ultra DLD spectrometer, using a monochromatic Al K$\alpha$ source (15 kV, 20 mA). High resolution narrow scans were performed at constant pass energy of 10 eV and steps of 0.1 eV. The photoelectrons were detected at a take-off angle $\theta$ = 0° with respect to the surface normal. The pressure in the analysis chamber was maintained below 7 $\times$ $10^{-9}$ Torr for data acquisition. The data were converted to VAMAS format and processed using Casa XPS software, version 2.3.16. The binding energy (BE) scale was internally referenced to the C Is peak (BE for C-C = 284.8 eV).

**Electrochemical Measurements.** Electrochemical 2032 coin cells were fabricated inside a MBraun glovebox with < 0.1ppm $H_2O$ and < 0.1 ppm $O_2$. The working electrode was prepared by mixing the active materials (CTB nanowires, super P carbon and polyvinylidene difluoride (PVDF)) in the weight ratio of 70:20:10, casted onto copper current collector then dried overnight at 120 °C under vacuum. The mass of the composite electrode materials was between 2.5 and 3.0 mg. Lithium metal was used as counter and reference electrode and 1.0M of $LiPF_6$ in ethylene carbonate/dimethyl carbonate (1:1 v/v) from BASF was used as the electrolyte. All electrochemical measurements were carried out with Biologic MPG-2 multichannel battery unit and PARSTAT 4000 Potentiostat/galvanostat at room temperature (~25 °C).

## RESULTS AND DISCUSSIONS

In order to verify the contribution from the carbon doping and identify the crystal structure and morphologies, the CTB-NWs were examined by scanning and transmission electron microscopy (SEM and TEM), X-ray diffraction (XRD), X-ray photoelectron spectroscopy (XPS) and Raman spectroscopy. Similarly, the intermediate synthesis products were studied by XRD. For comparison, the undoped TB nanowires (TB-NWs) were prepared from $TiO_2$ particles (see Supporting Information, SI). Finally, both the CTB-NWs and the TB-NWs were tested as anode materials for LIBs. The results demonstrate superior performance of CTB-NWs in terms of capacity, rate capability, and better cycle life stability than the TB-NWs. Indeed, during cycling experiments, the CTB-NWs exhibited lithium storage capacity of ~306 mA h $g^{-1}$ (91% of the theoretical capacity) at the current rate of 0.1C as well as excellent discharge capacity of ~160 mAh $g^{-1}$ even at the current rate of 10C after 1000 charge/discharge cycles.

The direct carbon doping of bronze $TiO_2$ was achieved by a multi-step hydrothermal synthesis (see Figure 1a). The first step is the transformation of the TiC precursor into C-doped $TiO_2$ (CT) by heat treatment, which is followed by the synthesis of C-doped sodium titanate nanowires (Na-CT NWs) *via* hydrothermal approach in alkaline media. In the last step, the wires undergo an acid treatment, by which sodium is replaced by hydrogen, yielding to hydrogen titanate nanowires (H-CT NWs), followed by calcination at 300 °C (in the present context carbon is the heteroatom). It is important to note that no additional carbon source was used. For comparison, TB-NWs were synthesized by using $TiO_2$ (anatase and rutile) particles, following the synthesis protocol discussed in the Supporting Information.

**Morphological and Structural studies.** The wire like morphology of the particles was evidenced from both high resolution SEM and TEM (Figure 1b-c). All the synthesized nanowires are between 2 $\mu$m and 10 $\mu$m long with width in the range of 20-200 nm. Furthermore, no agglomeration was observed. The high resolution TEM image of a single nanowire (Figure 1d) evidences two sets of well-defined lattice fringes, with interplanar distances of 0.35 nm and 0.58 nm that are related to the (110) and (100) planes of TB, respectively. Both the Fast Fourier Transform (FFT, Figure 1d) and the high resolution TEM image prove that the wires have a bronze phase. SEM images of the TiC (Step 1), C-doped $TiO_2$ (Step 2) and C-doped sodium titanate nanowires are reported in Figure S1a, S1b and S1c of the SI, respectively. These images suggest that the nanowires formation occurs during the hydrothermal reaction in alkaline media and it is not affected by proton exchange and calcination. Undoped TB-NWs were synthesized too and their SEM images are presented in Figure S2.

The XRD patterns of both TB-NWs and CTB-NWs, reported in Figure 2a, match the monoclinic TB, with space group C2/m(12) (ICDD card number 046-1237), and they both show the presence of a small quantity of anatase (asterisk). Importantly, the CTB-NWs diffraction peaks at (110) and (020) are slightly shifted to lower angles with respect to the corresponding TB-NWs diffraction peaks: the (110) peak shifted from 24.88° to 24.70° and the (020) peak shifted from 48.32° to 48.20° (Figure 2b). It has been already suggested[51] that this shift originates from lattice expansion occurring when carbon is introduced in the $TiO_2$ crystal lattice, similarly to the doping of sulphur in $TiO_2$[52] and of fluorine in $SnO_2$[53]. Furthermore, X-ray diffraction was used to investigate the different synthesis steps reported in Figure 1, namely the complete transformation of TiC in CT under thermal annealing conditions, the formation of C-doped sodium titanate nanowires in alkaline media followed by their hydrogenation (C-doped hydrogen titanate nanowires) and the final transformation into crystalline and highly pure CTB-NWs phase, as shown in figure S3.

The surface composition and chemical state of the different constituents of both CTB-NWs and TB-NWs were studied by XPS. Figure 2(c) shows XPS spectra collected from CTB-NWs and TB-NWs powders over the binding energy (BE) range typical for C1s and Ti 2p core levels. From Figure 2c, the peaks located at the BE values of 284.8 eV, 286.6 eV and 288.9 eV for both CTB-NWs and TB-NWs correspond to the elemental carbon C-C, C-O and O-C=O bonds, respectively.[54, 55] It was also reported that the presence of the 288.9 eV peak can result from the formation of C-O bonds through the replacement of Ti atoms by carbon in the $TiO_2$ lattice, resulting in the formation of Ti-O-C/O-Ti-C

structures[55-58]. Therefore, the peak at 288.9 eV could be the summation of contributions from O-C=O bonds due to adventitious carbon[59,60] and C-doping into the $TiO_2$ lattice. These considerations, together with the result that CTB-NWs peak at 288.9 eV has an amplitude significantly higher than the corresponding peak for the TB-NWs structure, suggests a significant presence of carbon doping in the CTB-NWs. This conclusion is also supported by the XPS spectra around the Ti 2p band region (Figure 2c) where a shift of ~ 0.2 eV between the Ti $2p_{3/2}$ peaks of CTB-NWs (458.6 eV) and TB-NWs (458.8 eV) can be observed. Indeed, the insertion of carbon in the $TiO_2$ lattice results in a shift of Ti 2p towards lower binding energy values, due to the lower electronegativity of carbon with respect to oxygen[61-63], and it represents an increase of $Ti^{+3}$ species due to charge compensation mechanism in the carbon doped $TiO_2$-B sample.[37] Quantitative analysis was carried out to estimate the carbon content in the sample, using the C Is (288.9 eV) region. According to the analysis, the percentage of carbon content in the CTB-NWs is 1.0% higher than in the TB-NWs.[55] XPS was employed to analyze the CT powder obtained by thermal annealing of TiC (Step 1 in Figure 1a). This spectrum, together with the corresponding XPS analysis of the TiC precursor and of the CTB-NWs, is reported in Figure S5. From the figure we can conclude that there are no longer the characteristic C1s and Ti 2p peaks of TiC, hence revealing the complete oxidation of TiC into CT.

Furthermore, the effect of the C-doping on the optical band gap was examined by recording UV-Visible spectra of CTB-NWs and TB-NWs (see Figure S6 in SI). The CTB-NWs exhibited slightly red-shifted absorbance, therefore a narrowing on the band gap, with respect to the TB-NWs. This is expected due to carbon doping.[63-65]

**Electrochemical Performance.** The performance of the CTB-NWs as anode material for lithium-ion batteries was extensively evaluated by electrochemical measurements. CTB-NWs and TB-NWs electrodes were fabricated and assembled in 2032 type coin cells using lithium metal as counter and reference electrode. The cells preparation was performed in a glove box under argon atmosphere (< 0.1 PPM of $O_2$ and $H_2O$). A standard solution of 1M $LiPF_6$ in ethylene carbonate/dimethyl carbonate (1:1 v/v) was used as electrolyte. The cells were characterised by cyclic voltammetry, electrochemical impedance spectroscopy and galvanostatic charging-discharging studies. Electrodes based on CTB-NWs and TB-NWs were tested at the scan rate of 0.1 mV $s^{-1}$ between 1.0 V and 2.5 V vs $Li^+$/Li, as shown in Figure 3a. For both the CTB-NWs and the TB-NWs, the voltammograms exhibited two pairs of cathodic and anodic peaks at the potentials of ~ 1.57 V, 1.49 V and 1.55V, 1.62 V vs $Li^+$/Li, respectively. Electrodes from the CTB-NWs exhibited higher current densities than TB-NWs, which was related to their higher ionic and electronic conductivity. The observed peaks are the signatures of $TiO_2$-bronze phase (TB), also known in literature as S1 and S2 surface adsorption peaks.[24] In this article, Graetzel et al. reported that S1 and S2 peaks are due to the different energy barriers for Li-ions transfer at the (100) and (001) faces of $TiO_2$-B and/or might be associated with two distinct super-structures of $Li_xTiO_2$-B. This finding is in good agreement with both the Raman spectra (Figure S4) and with the XRD pattern of Figure 2a, where the TB phase was first identified. Minor reversible peaks at potential of ~1.76 V and 1.95 V vs $Li^+$/Li were observed for both CTB-NWs and TB-NWs, which were related to small amounts of anatase $TiO_2$. This was expected because minor anatase $TiO_2$ phase was observed in XRD patterns of both electrode materials (Figure 2a). Importantly, the disappearing of the peaks was observed upon cycling.

The performances of both CTB-NWs and TB-NWs were studied by galvanostatic charging-discharging tests, reported in Figure 3b. The cell made with CTB-NWs electrodes exhibited charge and discharge capacities for the first cycle of ~ 345 and 292 mAh $g^{-1}$, respectively, and columbic efficiency of ~ 85% at current rate of 0.1C. The cells fabricated with TB-NWs showed first cycle charge and discharge capacities of ~ 342 and 285 mAh $g^{-1}$, respectively, with a columbic efficiency of ~ 83% at 0.1 C current rate. Upon cycling, the cells reached a columbic efficiency close to 99%. The loss of capacity for both CTB-NWs and TB-NWs in the first cycles is attributed to the irreversible interaction between the TB nanowires and the electrolyte[62]. While the capacity retention of both electrodes were similar during the initial three cycles, upon further cycling a capacity fading was observed for the TB-NWs electrode, which reached a capacity of ~ 203 mAh $g^{-1}$ after 40 cycles. On the contrary, the CTB-NWs electrode exhibited higher stability, with lower capacity fading and a discharge capacity of 280 mAh $g^{-1}$ after 40 cycles. This better performance of CTB-NWs due to carbon doping leads to high electrical conductivity and higher lithium ion diffusion with hopping of electrons from $Ti^{3+}$ sites with low valence states to $Ti^{4+}$ sites with high valence states.[37]

In order to investigate the electrochemical kinetics, electrochemical impedance spectroscopy measurements were carried out for both CTB-NWs and TB-NWs electrode materials at several different states of charge in a frequency range from 100 kHz to 0.1 Hz with an amplitude of 10 mV. The Nyquist plots of both CTB-NWs and TB-NWs electrodes with their corresponding electrical circuits are presented in Figure 3 (c to f) at potentials of 2.6 V (open circuit voltage, OCV), 1.95 V (partial lithiation), 1.1 V (complete lithiation) and 2.2 V (complete de-lithiation). From these plots, the intercepts of both materials at the highest frequency range are related to the internal resistance ($R_s$) of the electrolyte, separator and currents collector. The semicircle in the range from high to mid frequency is instead related to the charge-transfer process defined by the charge-transfer resistance ($R_{ct}$) and by the double layer capacitance ($C_{dl}$). At low frequencies, the semicircle is followed by a sloping line, which defines the Warburg (W) region related to the Li-ion diffusion. In particular, Figures 3c-f show that $R_s$ from CTB-NWs and TB-NWs plots are quite similar to each other and lie between 3.8 $\Omega$ to 8.5 $\Omega$ at all potentials, indicating that the resistance due to the electrolyte, separator and current collector is approximately the same in both cells. Furthermore, the $R_{ct}$ and Warburg region have similar profiles for both electrodes, with the $R_{ct}$ value for the CTB-NWs smaller than TB-NWs. This result was related to the presence of C-doping, which increases the electrical conductivity of CTB-NWs material.

The behaviour of $R_{ct}$ depends on the electric potential. In particular, at 1.95 V, where Li-ions start to be intercalated in the active TB material (Figure 3d) $R_{ct}$ is lower than under OCV conditions. At 1.1 V we observe an increase of $R_{ct}$ with the concomitant appearance of a second semicircle which, according to previous reports,[25, 66-70] is related to the bulk resistance $R_b$ defined as the resistivity of the electrolyte trapped in the pores of the composite electrode material (such as active material, conductive carbon and binder). At 2.2 V (Figure 3f) the data showed similar profiles and similar $R_{ct}$ (between 17 $\Omega$ and 25 $\Omega$, where $R_s$ about 5 $\Omega$ is considered) with respect to the cell measured at OCV, hence implying a reversible system. Importantly, the impedance studies show that CTB-NWs at various charge-discharge potentials have lower $R_{ct}$ values than the undoped counterpart, while galvanostatic studies evidence higher reversible capacity than TB-NWs, indicating improved electrical conductivity by carbon doping, namely better CTB-NWs cycling performances. These results have been confirmed by the calculation of the ratio between the Li-ion diffusion coefficients ($D_{Li}$) for CTB-NWs and TB-NWs. Indeed, from the Nyquist plots at OCV (Figure 3c), the DLi of the CTB-NWs was found to be about 2.9 times higher than the DLi of the TB-NWs (see Figure S7a of SI), whereas at 1.95 V, CTB-NWs showed 3.2 times higher DLi compared to TB-NWs. In addition, the DLi of both CTB-NWs and TB-NWs at 1.95 V was about 70 times higher than DLi at OCV (see Figure S7).[71-72]

The long cycling and high rate performances of CTB-NWs electrode materials were examined by cyclic voltammetry and galvanostatic charge-discharge cycling studies at various scan rates and current rates. The first 50 voltammograms, measured at 0.1 mV s$^{-1}$, are showed in Figure 4a. The cycling voltammetry shows good reversibility for the CTB-NWs electrode along with stable anodic and cathodic currents. The characteristic peak of anatase seen in Figure 4a (asterisk) disappears from the 5th cycle on. This behaviour suggests that the irreversible capacity from the initial cycles might be related to the presence of small impurity of anatase $TiO_2$. Similarly, cyclic voltammograms at different scan rates are shown in Figure 4b. The peak current increases linearly with increasing the scan rate (see inset Figure 4b) according to the pseudo capacitive charge storage behaviour of the TB electrode reported in the literature.[19, 24]

The rate performance of the CTB-NWs electrode was examined at various current rates and the data are shown in Figure 4c. The discharge capacities of ~ 290, 273, 265, 262, 258, 228, 203, 180 and 172 mAh g$^{-1}$ were recorded at an increasing current rates of C/20, C/10, C/5, C/2.5, C/2, C, 2C, 5C and 10C, respectively. In particular, the long cycling performance of CTB-NWs electrodes was studied at C/2, 1C and 5C current, and yielded capacities of 220, 205 and 180 mAh g$^{-1}$ after 250 cycles, respectively (Figure S8). For all of the cases a columbic efficiency of ~ 100% was attained. Cycling performances for a single CTB-NWs cell was examined at various current rates of charge and discharge. The capacity retention of symmetrical charge and discharge at C/2, 1C, 2C, 5C, 10C and again back to initial rate of C/2 showed discharged capacities of 265, 240, 220, 185, 145 and 250 mAh g$^{-1}$, respectively and a columbic efficiency around ~ 100% (see Figure 4d). Similarly, single cell of TB-NWs was examined at various current rates of charge and discharge with their corresponding columbic efficiencies (see Figure S9). The analysis evidenced the higher specific capacity and capacity retention of the CTB-NWs over the TB-NWs. These results prove that CTB-NWs is a suitable active material for applications requiring fast charging and discharging LIBs.

The long term and high rate cycling of CTB-NWs was carried out at the current rate of 10C for 1000 cycles (Figure 5). The result shows capacity retention of ~ 81% (160 mAh g$^{-1}$) of the initial state after 1000 cycles. This remarkable performance, both in the long cycling capability and high rate of CTB-NWs, can be related to the 1-Dimentional nanowire morphology along with carbon doping. Indeed, the carbon doping increases the electrical conductivity as well as it decreases the Li-ions diffusion length.

Accordingly, the invention provides a simple and inexpensive method to implement carbon direct doping into TB nanowires by hydrothermal approach without using any external carbon source. For comparison undoped TB nanowires were prepared by the same protocol. The formation of TB nanowires was confirmed by XRD, SEM/TEM, and Raman, while XRD and XPS spectroscopy proved the presence of carbon doping. Both doped and undoped TB nanowires were electrochemically characterized by Cyclic Voltammetry, Electrochemical Impedance Spectroscopy and galvanostatic charging-discharging techniques. It was found that carbon doped TB nanowires exhibited lower $R_{CT}$ and better cycling performances than the undoped counterpart. In particular, carbon doped TB nanowires revealed remarkable electrochemical performance with considerable lithium storage capacity, high rate performance during charge and discharge, and a significant capacity retention (81% of the initial value) at 10C rate after 1000 cycles.

The carbon-doped TB nanowires of the invention find further application and use for Sodium ion batteries, for the production of supercapacitors and pseudo capacitors, for dye sensitized solar cells and in photo catalysis and photo degradation of organic molecules.

**SUPPORTING INFORMATION**

**Synthesis of undoped $TiO_2$-Bronze nanowires (TB-NWs)** - not according to the invention

The nanowires of TB were synthesized through multi step procedure from titanium-(iv) iso propoxide. In particular, 2.842 grams of titanium-(iv) iso propoxide were added to 10 ml of anhydrous ethanol. Furthermore, deionized water was continuously added to the above solution while stirring. The result was an immediate colour change of the solution, from colourless to milk white colour, indicating the formation of titanium dioxide. After 2 hours of continuous stirring, white colour powder ($TiO_2$) was obtained from centrifugation, and annealed at 500 °C for five hours (as followed for the synthesis of CTB-NWs, Step 1). Finally, TB nanowires were synthesized under hydrothermal route in alkaline solution (NaOH). In particular, 0.2 grams of $TiO_2$ were dispersed, while stirring, in 20 ml solution of 10 M NaOH, to be transferred to Teflon lined autoclave and brought to 160 °C temperature for 48 hours. The obtained product was washed 3 times with Millipore water through centrifugation, procedure followed by 3 times washing in 0.1 M HCl solution, 6 times with Millipore water and again with ethanol. Finally, drying procedure was performed under vacuum at 40 °C overnight. The resulting product was heat treated at 300 °C for 120 minutes at a heat rate of 2 °C per min, yielding a white powder, i.e. TB nanowires. The morphology and crystal structure were examined by using scanning electron microscopy, X-ray diffraction pattern and X-ray photoelectron spectroscopy as presented in Figure S2 and Figure 2a/2c, respectively.

**X-Ray Diffraction.**

The changes in the crystal structure at different synthesis steps were investigated by X-ray diffraction. As previously described, the formation of CTB-NWs involved the complete oxidation of TiC into micron sized CT (both anatase and rutile) and the transformation of these particles into nanowires structures. In this regard, Figure S3 shows the XRD pattern of TiC precursor and of the reaction intermediates CT, C-doped sodium titanate nanowires (C-$Na_2Ti_9O_{19}$; Na-CT NWs, Step 2), C-doped hydrogen titanate nanowires ($H_2Ti_8O_{17}$; H-CT NWs, Step 3 before performing calcination) and CTB-NWs. The figure clearly evidences the different phase transition of $TiO_2$ during the synthesis steps. Particularly descriptive of the process is the phase transformation of sodium titanate ($2\theta \sim 11°$, ICDD card number 078-1598) into hydrogen titanate ($2\theta \sim 9.8°$, ICDD card number 036-0656). Importantly, both Na and H are not present in the XRD spectra of CTB-NWs[13, 19]. Finally, the peak at $2\theta$ equal to 14.10° (ICDD card number 046-1237) is representative of TB phase, hence confirming the crystallographic phase of CTB-NWs. Similar considerations are valid for TiC precursor, indeed none of its characteristic peaks can be found in CT, sodium titanate, hydrogen titanate and CTB-NWs XRD spectra. From the latter pattern it can also be observed a very small amounts of anatase $TiO_2$ (indicated by the asterisk in the Figure S3). The presence of anatase may originate either from the raw residual of precursor before the hydrothermal process or from the phase transformation of $TiO_2$-Bronze phase during the calcination.

**Raman Spectroscopy**

Figure S4 shows the Raman spectra of both CTB-NWs and TB-NWs. The primitive cell of TB contains 36 Raman active modes ($18A_g$ and $18B_g$)[S1]. These vibrations are due to the bonding interactions of Ti-Ti, O-O and Ti-O[S2]. The figure reveals quite similar characteristic vibrations modes for both CTB-NWs and TB-NWs at 162, 170, 196, 248, 294, 412, 466 and 645 cm$^{-1}$ of TB phase and it is in excellent agreement with previous reports of either bulk or nanowires[S3-S7].

Furthermore, the high purity of TB phase is confirmed by the absence of the characteristic peak associated to anatase-$TiO_2$ (i.e. at 144 cm$^{-1}$). The Raman spectroscopy could not provide any clear evidence of carbon doping in CTB-NWs, which is explained through the very low percentage of carbon doping with respect to TB. Similar results were reported in Fe containing TB nanowires[45].

**X-ray Photoelectron Spectroscopy**

Figure S5 shows that the TiC peak at ~281.6 eV for C Is band, and the peaks at 454.9 eV and 460.8 eV for Ti 2p band (indicated with asterisk in the figure) completely disappear in both CT and CTB-NWs spectra. Based on these data and XRD patterns from Figure 2a, we can conclude that TiC is completely oxidized into CT by thermal annealing.

**UV-Visible Spectroscopy**

To estimate the effect of carbon doping on the band gap of $TiO_2$-B nanowires, UV-Visible absorption spectra were measured. As shown in Figure S6, a noticeable shift of absorption peak to the higher wavelength region was observed for the CTB-NWs in comparison with undoped TB-NWs. It is known that successful carbon doping into $TiO_2$

lattice yields red shift in the absorbance[S8-S10]. The approximate band gaps of CTB-NWs and TB-NWs result to be 2.83 and 2.96 eV respectively. These evidences prove the carbon doping in CTB-NWs which indeed leads to absorbance peak at higher wavelength and band gap narrowing of CTB-NWs compared to TB-NWs.

**Diffusion Coefficient calculation**

The Li-ion diffusion coefficient can be calculated according to the following formulas[S11,S12]:

$$Z_{Re} = R_{ct} + R_s + \sigma\,\omega^{-1/2} \qquad (1)$$

$$D_{Li} = \frac{R^2 T^2}{2A^2 n^4 F^4 C^2 \sigma^2} \qquad (2)$$

where $Z_{Re}$ is the real component of the impedance and $\sigma$ is the Warburg prefactor which can be obtained from combining Eq. (1) and Figure S7 In Eq. (2) the quantity $R$ is the Regnault gas constant, $T$ the absolute temperature, $A$ the electrode area, $n$ the number of electrons transferred in the redox couple, $F$ the Faraday's constant and $C$ the Li-ion concentration. From Eq. (2) the ratio between the diffusion coefficients of CTB-NWs and TB-NWs simplifies as the ratio between the corresponding Warburg prefactors. From Fig. S7 at OCV are found to be $\sigma_{CTB-NWs}$=29.97 $\Omega$ s$^{-1/2}$ and $\sigma_{TB-NWs}$=51.55 $\Omega$ s$^{-1/2}$ and at 1.95 V are $\sigma_{CTB-NWS}$=3.72 $\Omega$ s$^{-1/2}$ and $\sigma_{TB-NWs}$=6.71 $\Omega$ s$^{-1/2}$.

**REFERENCES**

(1) Bruce, P. G.; Scrosati, B.; Tarascon, J.-M. Nanomaterials for Rechargeable Lithium Batteries. Angew. Chem. Int. Ed. 2008, 47, 2930-2946.

(2) Aravindan, V.; Lee, Y.-S.; Madhavi, S. Research Progress on Negative Electrodes for Practical Li-Ion Batteries: Beyond Carbonaceous Anodes. Adv. Energy Mater. 2015, 1402225

(3) Goriparti, S.; Miele, E.; De Angelis, F.; Di Fabrizio, E.; Proietti Zaccaria, R.; Capiglia, C. Review on Recent Progress of Nanostructured Anode Materials for Li-ion batteries. J. Power Sources 2014, 257, 421-443.

(4) Bavykin, D. V.; Friedrich, J. M.; Walsh, F. C. Protonated Titanates and TiO2 Nanostructured Materials: Synthesis, Properties, and Applications . Adv. Mater. 2006, 18, 2807-2824.

(5) Zhu, G.-N.; Wang, Y.-G.; Xia, Y.-Y. Ti-based Compounds as Anode Materials for Li-ion Batteries . Energy & Environ. Sci. 2012, 5, 6652-6667.

(6) Djenizian, T.; Hanzu, I.; Knauth, P. Nanostructured Negative Electrodes Based on Titania for Li-ion Microbatteries. J. Mater. Chem. 2011, 21, 9925-9937.

(7) Ren, H.; Yu, R.; Wang, J.; Jin, Q.; Yang, M.; Mao, D.; Kisailus, D.; Zhao, H.; Wang, D. Multishelled TiO2 Hollow Microspheres as Anodes with Superior Reversible Capacity for Lithium Ion Batteries. Nano Letters 2014, 14, 6679-6684.

(8) Etacheri, V.; Yourey, J. E.; Bartlett, B. M. Chemically Bonded TiO2-Bronze Nanosheet/Reduced Graphene Oxide Hybrid for High-Power Lithium Ion Batteries . ACS Nano 2014, 8, 1491-1499.

(9) Li, W.; Wang, F.; Liu, Y.; Wang, J.; Yang, J.; Zhang, L.; Elzatahry, A. A.; Al-Dahyan, D.; Xia, Y.; Zhao, D. General Strategy to Synthesize Uniform Mesoporous Ti02/Graphene/Mesoporous TiO2 Sandwich-Like Nanosheets for Highly Reversible Lithium Storage. Nano Letters 2015, 15, 2186-2193.

(10) Scrosati, B.; Garche, J. Lithium batteries: Status, Prospects and Future. J. Power Sources 2010, 195, 2419-2430.

(11) Han, H.; Song, T.; Lee, E.-K.; Devadoss, A.; Jeon, Y.; Ha, J.; Chung, Y.-C.; Choi, Y.-M.; Jung, Y.-G.; Paik, U.

Dominant Factors Governing the Rate Capability of a TiO2 Nanotube Anode for High Power Lithium Ion Batteries. ACS Nano 2012, 6, 8308-8315.

(12) Kim, T.-H.; Park, J.-S.; Chang, S. K.; Choi, S.; Ryu, J. H.; Song, H.-K. The Current Move of Lithium Ion Batteries Towards the Next Phase. Adv. Energy Mater. 2012, 2, 860-872.

(13) Lux. S. F, Schappacher. F, Balducci. A, Passerini. S. Low Cost, Environmentally Benign Binders for Lithium-Ion Batteries, J. Electrochem. Soc, 2010, 157, A320-A325

(14) Armstrong, A. R.; Armstrong, G.; Canales, J.; Garcia, R.; Bruce, P. G. Lithium-Ion Intercalation into TiO2-B Nanowires. Adv. Mater. 2005, 17, 862-865.

(15) Madej, E.; La Mantia, F.; Schuhmann, W.; Ventosa, E. Impact of the Specific Surface Area on the Memory Effect in Li-Ion Batteries: The Case of Anatase TiO2. Adv. Energy Mater. 2014, 4, 1400829

(16) Xin, X.; Zhou, X.; Wu, J.; Yao, X.; Liu, Z. Scalable Synthesis of TiO2/Graphene Nanostructured Composite with High-Rate Performance for Lithium Ion Batteries. ACS Nano 2012, 6, 11035-11043.

(17) Wang, W.; Tian, M.; Abdulagatov, A.; George, S. M.; Lee, Y.-C.; Yang, R. Three-Dimensional Ni/TiO2 Nanowire Network for High Areal Capacity Lithium Ion Microbattery Applications. Nano Letters 2012, 12, 655-660.

(18) Qiu, J.; Zhang, P.; Ling, M.; Li, S.; Liu, P.; Zhao, H.; Zhang, S., Photocatalytic Synthesis of TiO2 and Reduced Graphene Oxide Nanocomposite for Lithium Ion Battery. ACS Appl. Mater. Interfaces 2012, 4, 3636-3642.

(19) Dylla, A. G.; Henkelman, G.; Stevenson, K. J. Lithium Insertion in Nanostructured TiO2(B) Architectures. Acc. Chem. Res. 2013, 46, 1104-1112.

(20) Armstrong, A. R.; Armstrong, G.; Canales, J.; Bruce, P. G. TiO2-B Nanowires," Angewandte Chemie International Edition. Angew. Chem. Int. Ed. 2004, 43, 2286-2288.

(21) Brutti, S.; Gentili, V.; Menard, H.; Scrosati, B.; Bruce, P. G. TiO2-(B) Nanotubes as Anodes for Lithium Batteries: Origin and Mitigation of Irreversible Capacity. Adv. Energy Mater. 2012, 2, 322-327.

(22) Aldon, L.; Kubiak, P.; Picard, A.; Jumas, J. C.; Olivier-Fourcade, J. Size Particle Effects on Lithium Insertion into Sn-doped TiO2 Anatase. Chem. Mater. 2006, 18, 1401-1406.

(23) Li, J.; Wan, W.; Zhou, H.; Li, J.; Xu, D. Hydrothermal Synthesis of TiO2(B) Sanowires with Ultrahigh Surface Area and Their Fast Charging and Discharging Properties in Li-ion Batteries. Chem. Commun. 2011, 3439-3441.

(24) Zukalová, M.; Kalbác, M.; Kavan, L.; Exnar, I.; Graetzel, M. Pseudocapacitive Lithium Storage in TiO2(B). Chem. Mater. 2005, 17, 1248-1255.

(25) Takami, N.; Harada, Y.; Iwasaki, T.; Hoshina, K.; Yoshida, Y. Micro-size Spherical TiO2(B) Secondary Particles as Anode Materials for High-power and Long-life Lithium-ion Batteries. J. Power Sources 2015, 273, 923-930.

(26) Ji, L.; Lin, Z.; Alcoutlabi, M.; Zhang, X. Recent Developments in Nanostructured Anode Materials for Rechargeable Lithium-ion Batteries. Energy & Environ. Sci. 2011, 4, 2682-2699.

(27) Okumura, T.; Fukutsuka, T.; Yanagihara, A.; Orikasa, Y.; Arai, H.; Ogumi, Z.; Uchimoto, Y. Nanosized Effect on Electronic/Local Structures and Specific Lithium-Ion Insertion Property in TiO2-B Nanowires Analyzed by X-ray Absorption Spectroscopy. Chem. Mater. 2011, 23, 3636-3644.

(28) López, M. C.; Ortiz, G. F.; González, J. R.; Alcántara, R.; Tirado, J. L. Improving the Performance of Titania Nanotube Battery Materials by Surface Modification with Lithium Phosphate. ACS Appl.Mater. Interfaces 2014, 6, 5669-5678.

(29) Wang, X.; Li, Z.; Shi, J.; Yu, Y. One-Dimensional Titanium Dioxide Nanomaterials: Nanowires, Nanorods, and Nanobelts. Chem. Rev. 2014, 114, 9346-9384.

(30) Tian, J.; Zhao, Z.; Kumar, A.; Boughton, R. I.; Liu, H. Recent Progress in Design, Synthesis, and Applications of One-dimensional TiO2 Nanostructured Surface Heterostructures: a Review. Chem. Soc. Rev. 2014, 43, 6920-6937.

(31) Bresser. D, Paillard. E, Binetti. E, Krueger. S, Striccoli. M, Winter. M, Passerini. S. Percolating Networks of TiO2 Nanorods and Carbon for High Power Lithium Insertion Electrodes, J. Power sources, 2012, 206, 301-309

(32) Wang, Q.; Wen, Z.; Li, J. Solvent-Controlled Synthesis and Electrochemical Lithium Storage of One-Dimensional TiO2 Nanostructures. Inorg. Chem. 2006, 45, 6944-6949.

(33) Lee, S.; Ha, J.; Choi, J.; Song, T.; Lee, J. W.; Paik, U. 3D Cross-Linked Nanoweb Architecture of Binder-Free TiO2 Electrodes for Lithium Ion Batteries. ACS Appl. Mater. Interfaces 2013, 5, 11525-11529.

(34) Li, X.; Zhang, Y.; Li, T.; Zhong, Q.; Li, H.; Huang, J. Graphene Nanoscrolls Encapsulated TiO2 (B) Nanowires for Lithium Storage. J. Power Sources 2014, 268, 372-378.

(35) Zhen, M.; Guo, S.; Gao, G.; Zhou, Z.; Liu, L. TiO2-B Nanorods on Reduced Graphene Oxide as Anode Materials for Li ion Batteries. Chem. Commun. 2015, 507-510.

(36) Giannuzzi, R.; Manca, M.; De Marco, L.; Belviso, M. R.; Cannavale, A.; Sibillano, T.; Giannini, C.; Cozzoli, P. D.; Gigli, G., Ultrathin TiO2(B) Nanorods with Superior Lithium-Ion Storage Performance. ACS Appl. Mater. Interfaces 2014, 6, 1933-1943.

(37) Jae-Hun, J.; Dong-won, J.; Eun, W. S.; Eun-Suok, Oh.; Boron-doped TiO2 Anode Materials for High-Rate Lithium Ion Batteries, J. Alloy Comp. 2014, 604, 226-232

(38) Kyeremateng, N. A.; Vacandio, F.; Sougrati, M. T.; Martinez, H.; Jumas, J. C.; Knauth, P.; Djenizian, T. Effect of Sn-doping on The Electrochemical Behaviour of TiO2 Nanotubes as Potential Negative Electrode Materials for 3D Li-ion Micro Batteries. J. Power Sources 2013, 224, 269-277.

(39) Thi, T. V.; Rai, A. K.; Gim, J.; Kim, S.; Kim, J. Effect of Mo6+ Doping on Electrochemical Performance of Anatase TiO2 as a High Performance Anode Material for Secondary Lithium-ion Batteries. J. Alloys. Compd. 2014, 598, 16-22.

(40) Bi, Z.; Paranthaman, M. P.; Guo, B.; Unocic, R. R.; Meyer Iii, H. M.; Bridges, C. A.; Sun, X.-G.; Dai, S. High Performance Cr, N-codoped Mesoporous TiO2 Microspheres for Lithium-ion Batteries. J. Mater. Chem. A 2014, 2, 1818-1824.

(41) Wang, Y.; Smarsly, B. M.; Djerdj, I. Niobium Doped TiO2 with Mesoporosity and Its Application for Lithium Insertion. Chem. Mater. 2010, 22, 6624-6631.

(42) Zhang, W.; Zhou, W.; Wright, J. H.; Kim, Y. N.; Liu, D.; Xiao, X. Mn-Doped TiO2 Nanosheet-Based Spheres as Anode Materials for Lithium-Ion Batteries with High Performance at Elevated Temperatures. ACS Appl. Mater. Interfaces 2014, 6, 7292-7300.

(43) Andriamiadamanana, C.; Laberty-Robert, C.; Sougrati, M. T.; Casale, S.; Davoisne, C.; Patra, S.; Sauvage, F. Room-Temperature Synthesis of Iron-Doped Anatase TiO2 for Lithium-Ion Batteries and Photocatalysis. Inorg. Chem. 2014, 53, 10129-10139.

(44) Zhang, W.; Gong, Y.; Mellott, N. P.; Liu, D.; Li, J. Synthesis of Nickel Doped Anatase Titanate as High Performance Anode Materials for Lithium Ion Batteries. J. Power Sources 2015, 276, 39-45.

(45) Jiao, W.; Li, N.; Wang, L.; Wen, L.; Li, F.; Liu, G.; Cheng, H.-M. High-rate Lithium Storage of Anatase TiO2 Crystals Doped with Both Nitrogen and Sulfur. Chem. Commun. 2013, 3461-3463.

(46) Kim, J.-G.; Shi, D.; Kong, K.-J.; Heo, Y.-U.; Kim, J. H.; Jo, M. R.; Lee, Y. C.; Kang, Y.-M.; Dou, S. X. Structurally and Electronically Designed TiO2Nx Nanofibers for Lithium Rechargeable Batteries. ACS Appl. Mater. Interfaces 2013, 5, 691-696.

(47) Li, Y.; Wang, Z.; Lv, X.-J. N-doped TiO2 Nanotubes/N-doped Graphene Nanosheets Composites as High Performance Anode Materials in Lithium-ion Battery. J. Mater. Chem.A 2014, 2, 15473-15479.

(48) Grosjean, R.; Fehse, M.; Pigeot-Remy, S.; Stievano, L.; Monconduit, L.; Cassaignon, S. Facile Synthetic Route Towards Nanostructured Fe-TiO2(B), Used as Negative Electrode for Li-ion Batteries. J. Power Sources 2015, 278, 1-8.

(49) Li, J.; Yang, D.; Zhu, X.; Wang, L.; Umar, A.; Song, G. Preparation and Electrochemical Characterization of Sn–Doped TiO2(B) Nanotube as an Anode Material for Lithium-Ion Battery. Sci. Adv. Mater. 2015, 7, 821-826.

(50) Zhang, Y.; Fu, Q.; Xu, Q.; Yan, X.; Zhang, R.; Guo, Z.; Du, F.; Wei, Y.; Zhang, D.; Chen, G., Improved Electrochemical Performance of Nitrogen Doped TiO2-B Nanowires as Anode Materials for Li-ion batteries. Nanoscale 2015, 7, 12215-12224.

(51) Wu, X.; Yin, S.; Dong, Q.; Guo, C.; Li, H.; Kimura, T.; Sato, T. Synthesis of High Visible Light Active Carbon Doped TiO2 Photocatalyst by a Facile Calcination Assisted Solvothermal Method. Appl. Catalysis B: Environ. 2013, 142-143, 450-457.

(52) Li, N.; Zhang, X.; Zhou, W.; Liu, Z.; Xie, G.; Wang, Y.; Du, Y. High Quality Sulfur-doped Titanium Dioxide Nanocatalysts with Visible Light Photocatalytic Activity From Non-hydrolytic Thermolysis Synthesis. Inorg. Chem. Frontiers 2014, 1, 521-525.

(53) Sun, J.; Xiao, L.; Jiang, S.; Li, G.; Huang, Y.; Geng, J. Fluorine-Doped SnO2@Graphene Porous Composite for High Capacity Lithium-Ion Batteries. Chem. Mater. 2015, 27, 4594-4603.

(54) Cheng, C.; Sun, Y. Carbon Doped TiO2 Nanowire Arrays with Improved Photoelectrochemical Water Splitting Performance. Appl. Surf. Sci. 2012, 263, 273-276.

(55) Kiran, V.; Sampath, S. Enhanced Raman Spectroscopy of Molecules Adsorbed on Carbon-Doped TiO2 Obtained from Titanium Carbide: A Visible-Light-Assisted Renewable Substrate. ACS Appl. Mater. Interfaces 2012, 4, 3818-3828.

(56) Gu, D.-e.; Lu, Y.; Yang, B.-c.; Hu, Y.-d. Facile Preparation of Micro-mesoporous Carbon-doped TiO2 Photocatalysts with Anatase Crystalline Walls Under Template-free Condition. Chem. Commun. 2008, 2453-2455.

(57) Yu, J.; Dai, G.; Xiang, Q.; Jaroniec, M. Fabrication and Enhanced Visible-Light Photocatalytic Activity of carbon self-doped TiO2 sheets with exposed {001} facets. J.Mater. Chem. 2011, 21, 1049-1057.

(58) Zhang, Y.; Zhao, Z.; Chen, J.; Cheng, L.; Chang, J.; Sheng, W.; Hu, C.; Cao, S. C-doped Hollow TiO2 Spheres: in Situ Synthesis, Controlled Shell Thickness, and Superior Visible-Light Photocatalytic Activity. Appl. Catalysis B: Environ. 2015, 165, 715-722.

(59) Ye, C.; Xuanke, L.; Yun, Q.; Zhijun, D.; Guanming, Y.; Zhengwei, C.; Xiaojun, L. Carbon-doped TiO2 Coating on Multiwalled Carbon Nanotubes with Higher Visible Light-Photocatalytic Activity, Appl. Catal., B, 2011, 107, 128-134.

(60) David, R.P.; Quantitative Chemical Analysis by ESCA. J. Electron Spec. Rel. Phen., 1976, 9, 29.

(61) Cong, Y.; Zhang, J.; Chen, F.; Anpo, M. Synthesis and Characterization of Nitrogen-Doped TiO2 Nanophotocatalyst with High Visible Light Activity. J. Phy. Chem. C 2007, 111, 6976-6982.

(62) Shao, G.-S.; Zhang, X.-J.; Yuan, Z.-Y. Preparation and Photocatalytic Activity of Hierarchically Mesoporous-macroporous TiO2-xNx. Appl. Catalysis B: Environ. 2008, 82, 208-218.

(63) Zhang, L.; Tse, M. S.; Tan, O. K.; Wang, Y. X.; Han, M. Facile Fabrication and Characterization of Multi-type Carbon-doped TiO2 for Visible Light-activated Photocatalytic Mineralization of Gaseous Toluene. J. Mater. Chem. A 2013, 1, 4497-4507.

(64) Yeongsoo, C.; Fabrication and Characterization of C-doped Anatase TiO2 Photocatalysts. J. Mater. Sci. 2004, 39, 1837 - 1839.

(65) Jinwei, X.; Yunfei, W.; Zonghui, L.; Zhang, W.F.; Preparation and Electrochemical Properties of Carbon-doped TiO2 Nanotubes as an Anode Material for Lithium-ion Batteries. J.Power Sources, 2008, 175, 903-908.

(66) Armstrong, A. R.; Armstrong, G.; Canales, J.; Bruce, P. G. TiO2-B Nanowires as Negative Electrodes for Rechargeable Lithium Batteries. J. Power Sources 2005, 146, 501-506.

(67) Reddy, M. V.; Jose, R.; Teng, T. H.; Chowdari, B. V. R.; Ramakrishna, S. Preparation and Electrochemical Studies of Electrospun TiO2 Nanofibers and Molten Salt Method Nanoparticles. Electrochim. Acta 2010, 55, 3109-3117.

(68) Reddy, M. V.; Madhavi, S.; Subba Rao, G. V.; Chowdari, B. V. R. Metal oxyfluorides TiOF2 and NbO2F as anodes for Li-ion batteries. J. Power Sources 2006, 162,1312-1321.

(69) Levi, M. D.; Aurbach, D. Impedance of a Single Intercalation Particle and of NonHomogeneous, Multilayered Porous Composite Electrodes for Li-ion Batteries. J. Phy. Chem. B 2004, 108, 11693-11703.

(70) Zhang, Z.; Zhou, Z.; Nie, S.; Wang, H.; Peng, H.; Li, G.; Chen, K. Flower-like Hydrogenated TiO2(B) Nanostructures as Anode Materials for High Performance Lithium ion Batteries. J.Power Sources 2014, 267, 388-393.

(71) He, C.;Raistrick, I.D.; Huggins, R.A. Application of A-C Techniques to the Study of Lithium Diffusion in Tungsten Trioxide Thin Films 1980, 127, 343-350.

(72) Hiroki, M.; Tatsuya, N.; Yo, K.; Mitsuharu, T.; Yoshihiro, Y.Open-circuit Voltage Study on LiFePO4 Olivine Cathode. J. Power Sources, 2010, 195, 6879-6883. (S1) Ben Yahia, M.; Lemoigno, F.; Beuvier, T.; Filhol, J.-S.; Richard-Plouet, M.; Brohan, L.; Doublet, M.-L. Updated References for the Structural, Electronic, and Vibrational Properties of TiO2 (B) Bulk Using First-Principles Density Functional Theory Calculations. J. Chem. Phys. 2009, 130, 204501.

(S2) Hardcastle, F. D.; Ishihara, H.; Sharma, R.; Biris, A. S. Photoelectroactivity and Raman Spectroscopy of Anodized Titania (TiO2) Photoactive Water-Splitting Catalysts as a Function of Oxygen-Annealing Temperature. J. Mater. Chem. 2011, 21, 6337.

(S3) Armstrong, A. R.; Armstrong, G.; Canales, J.; Bruce, P. G. TiO2-B Nanowires. Angew. Chem., Int. Ed. 2004, 43, 2286-2288.

(S4) Grosjean, R.; Fehse, M.; Pigeot-Remy, S.; Stievano, L.; Monconduit, L.; Cassaignon, S. Facile Synthetic Route towards Nanostructured Fe-TiO2(B), Used as Negative Electrode for Li-Ion Batteries. J. Power Sources 2015, 278, 1-8.

(S5) Dylla, A. G.; Lee, J. A.; Stevenson, K. J. Influence of Mesoporosity on Lithium-Ion Storage Capacity and Rate Performance of Nanostructured TiO2 (B). Langmuir 2012, 28, 2897-2903.

(S6) Dylla, A. G.; Stevenson, K. J. Electrochemical and Raman Spectroscopy Identification of Morphological and Phase Transformations in Nanostructured TiO2 (B). J. Mater. Chem. A 2014, 2, 20331-20337.

(S7) Beuvier, T.; Richard-Plouet, M.; Brohan, L. Accurate Methods for Quantifying the Relative Ratio of Anatase and TiO2 (B) Nanoparticles. J. Phys. Chem. C 2009, 113, 13703-13706.

(S8) Yeongsoo, C.; Fabrication and characterization of C-doped anatase TiO2 photocatalysts. J. Mater. Sci. 2004, 39, 1837 - 1839.

(S9) Jiaguo, Y.; Gaopeng, Dai.; Quanjun, X.; Mietek, J.; Fabrication and enhanced visible-light photocatalytic activity of carbon self-doped TiO2 sheets with exposed {001} facets, J. Mater. Chem., 2011, 21, 1049-1057.

(S10) Jinwei, X.; Yunfei, W.; Zonghui, L.; Zhang, W.F.; Preparation and electrochemical properties of carbon-doped TiO2 nanotubes as an anode material for lithium-ion batteries. J.Power Sources, 2008, 175, 903-908.

(S11) Sun, J.; Xiao, L.; Jiang, S.; Li, G.; Huang, Y.; Geng, J. Fluorine-Doped SnO2 @Graphene Porous Composite for High Capacity Lithium-Ion Batteries. Chem. Mater. 2015, 27, 4594-4603.

(S12) Zhang, Z.; Zhou, Z.; Nie, S.; Wang, H.; Peng, H.; Li, G.; Chen, K. Flower-like Hydrogenated TiO2(B) Nanostructures as Anode Materials for High-Performance Lithium Ion Batteries. J. Power Sources 2014, 267, 388-393.

## Claims

1. A process for producing carbon-doped titanium dioxide bronze nanostructures, comprising the steps of:

   - oxidizing titanium carbide particles to obtain carbon-doped titanium oxide particles,
   - hydrothermally reacting said carbon-doped titanium oxide particles in an alkaline medium at a temperature of from 100 to 250°C, to obtain carbon-doped alkali metal titanate nanostructures,
   - treating said carbon-doped alkali metal titanate nanostructures with diluted strong inorganic acid solution to obtain carbon-doped hydrogen titanate nanostructures, and
   - calcinating said carbon-doped hydrogen titanate nanostructures at a temperature of from 200 to 400°C to obtain said carbon-doped titanium bronze nanostructures.

2. A process according to claim 1, wherein said titanium carbide particles have a volume equivalent sphere diameter of from 2 to 20 $\mu$m.

3. A process according to claim 1 or 2, wherein said alkaline solution is a sodium or potassium hydroxide aqueous solution having a molar concentration of from 5 to 15 moles/l.

4. A process according to any of claims 1 to 3, wherein said acid treatment is carried out with the use of an acid solution selected from hydrogen chloride, sulphuric acid and nitric acid.

5. A process according to any of claims 1 to 4, wherein said nanostructure are selected from the group consisting of nanowires, nanofibers, nanorods, nanotubes and nanoparticles.

6. A process according to any of claims 1 to 5, wherein said hydrothermal reaction is carried out under pressure of from 1 to 100 atm, preferably for a time of from 12 to 166 hours.

7. A process according to claim 6, wherein said hydrothermal reaction is carried out at a temperature of 160°C for a time of 48 hours to obtain carbon-doped alkali metal titanate nanowires.

8. A process according to any of the preceding claims wherein said oxidizing step is carried out by a thermal treatment in an oxygen comprising atmosphere at a temperature of from 350 to 700°C.

9. A lithium ion battery having an anode comprising carbon-doped titanium bronze nanostructures.

10. A lithium ion battery according to claim 9, wherein said nanostructures are nanowires as obtained by the process of claim 1.

11. Carbon-doped titanium bronze nanowires.

12. Carbon-doped titanium bronze nanowires according to claim 11 as obtained by the process of claim 7.

## Patentansprüche

1. Verfahren zur Herstellung von kohlenstoffdotierten Titandioxid-Bronze-Nanostrukturen, aufweisend die Schritte des/der:

   - Oxidierens von Titancarbidpartikeln zum Erhalten von kohlenstoffdotierten Titanoxidpartikeln,

- hydrothermalen Reaktion der kohlenstoffdotierten Titanoxidpartikel in einem alkalischen Medium bei einer Temperatur von 100 bis 250°C zum Erhalten von kohlenstoffdotieren Alkalimetalltitanat-Nanostrukturen,
- Behandelns der kohlenstoffdotieren Alkalimetalltitanat-Nanostrukturen mit verdünnter stark anorganischer Säurelösung zum Erhalten von kohlenstoffdotierten Wasserstofftitanat-Nanostrukturen, und
- Kalzinierens der kohlenstoffdotierten Wasserstofftitanat-Nanostrukturen bei einer Temperatur von 200 bis 400°C zum Erhalten der kohlen stoffdotieren Titan-Bronze-Nanostrukturen.

2. Verfahren nach Anspruch 1, wobei die Titancarbidpartikel einen volumenäquivalenten Kugeldurchmesser von 2 bis 20 μm aufweisen.

3. Verfahren nach Anspruch 1 oder 2, wobei die Alkalilösung eine wässrige Natrium- oder Kaliumhydroxidlösung mit einer Molkonzentration von 5 bis 15 Mol/l ist.

4. Verfahren nach einem der Ansprüche 1 bis 3, wobei die Säurebehandlung mittels der Verwendung einer aus Chlorwasserstoff, Schwefelsäure und Salpetersäure ausgewählten Säurelösung durchgeführt wird.

5. Verfahren nach einem der Ansprüche 1 bis 4, wobei die Nanostrukturen aus der Gruppe bestehend aus Nanodrähten, Nanofasern, Nanostäbchen, Nanoröhrchen und Nanopartikeln ausgewählt werden.

6. Verfahren nach einem der Ansprüche 1 bis 5, wobei die hydrothermale Reaktion unter Druck durchgeführt wird, welcher von 1 bis 100 atm beträgt, bevorzugt für eine Zeitdauer von 12 bis 166 Stunden.

7. Verfahren nach Anspruch 6, wobei die hydrothermale Reaktion bei einer Temperatur von 160°C für eine Zeitdauer von 48 Stunden durchgeführt wird, um kohlenstoffdotierte Alkalimetalltitanat-Nanodrähte zu erhalten.

8. Verfahren nach einem der vorangehenden Ansprüche, wobei der Oxidierungsschritt durch eine thermale Behandlung in einer sauerstoffhaltigen Atmosphäre bei einer Temperatur von 350 bis 700°C durchgeführt wird.

9. Lithium-Ionen-Batterie mit einer kohlenstoffdotierte Titan-Bronze-Nanostrukturen aufweisenden Anode.

10. Lithium-Ionen-Batterie nach Anspruch 9, wobei die Nanostrukturen Nanodrähte sind, wie sie durch das Verfahren nach Anspruch 1 erhalten werden.

11. Kohlenstoffdotierte Titan-Bronze-Nanodrähte.

12. Kohlenstoffdotierte Titan-Bronze-Nanodrähte nach Anspruch 11, wie sie durch das Verfahren nach Anspruch 7 erhalten werden.


**Revendications**

1. Procédé pour produire des nanostructures de dioxyde de titane-bronze dopé au carbone, comprenant les étapes de :

- oxydation de particules de carbure de titane pour obtenir des particules d'oxyde de titane dopé au carbone,
- réaction hydrothermique desdites particules d'oxyde de titane dopé au carbone dans un milieu alcalin à une température de 100 à 250 °C, pour obtenir des nanostructures de titanate de métal alcalin dopé au carbone,
- traitement desdites nanostructures de titanate de métal alcalin dopé au carbone avec une solution d'acide fort inorganique dilué pour obtenir des nanostructures d'hydrogénotitanate dopé au carbone, et
- calcination desdites nanostructures d'hydrogénotitanate dopé au carbone à une température de 200 à 400 °C pour obtenir lesdites nanostructures de titane-bronze dopé au carbone.

2. Procédé selon la revendication 1, dans lequel lesdites particules de carbure de titane présentent un diamètre sphérique équivalent en volume de 2 à 20 μm.

3. Procédé selon la revendication 1 ou 2, dans lequel ladite solution alcaline est une solution aqueuse d'hydroxyde de sodium ou de potassium ayant une concentration molaire de 5 à 15 moles/l.

4. Procédé selon l'une quelconque des revendications 1 à 3, dans lequel ledit traitement acide est réalisé avec l'utilisation d'une solution acide sélectionnée parmi le chlorure d'hydrogène, l'acide sulfurique et l'acide nitrique.

5. Procédé selon l'une quelconque des revendications 1 à 4, dans lequel lesdites nanostructures sont sélectionnées dans le groupe constitué par les nanofils, les nanofibres, les nanotiges, les nanotubes et les nanoparticules.

6. Procédé selon l'une quelconque des revendications 1 à 5, dans lequel ladite réaction hydrothermique est réalisée sous une pression de 1 à 100 atm, de préférence pendant une durée de 12 à 166 heures.

7. Procédé selon la revendication 6, dans lequel ladite réaction hydrothermique est réalisée à une température de 160 °C pendant une durée de 48 heures pour obtenir des nanofils de titanate de métal alcalin dopé au carbone.

8. Procédé selon l'une quelconque des revendications précédentes dans lequel ladite étape d'oxydation est réalisée par un traitement thermique dans une atmosphère comprenant de l'oxygène à une température de 350 à 700 °C.

9. Batterie lithium-ion ayant une anode comprenant des nanostructures de titane-bronze dopé au carbone.

10. Batterie lithium-ion selon la revendication 9, dans laquelle lesdites nanostructures sont des nanofils tels qu'obtenus par le procédé selon la revendication 1.

11. Nanofils de titane-bronze dopé au carbone.

12. Nanofils de titane-bronze dopé au carbone selon la revendication 11 tels qu'obtenus par le procédé selon la revendication 7.

FIG. 1

FIG. 2

EP 3 371 104 B1

FIG. 3

FIG. 4

Coulombic Efficiency (%)

Specific capacity (mAh g$^{-1}$)

Cycle number

● Discharging
● Charging
● Efficiency

FIG. 5

FIG.C

FIG.B

FIG.A

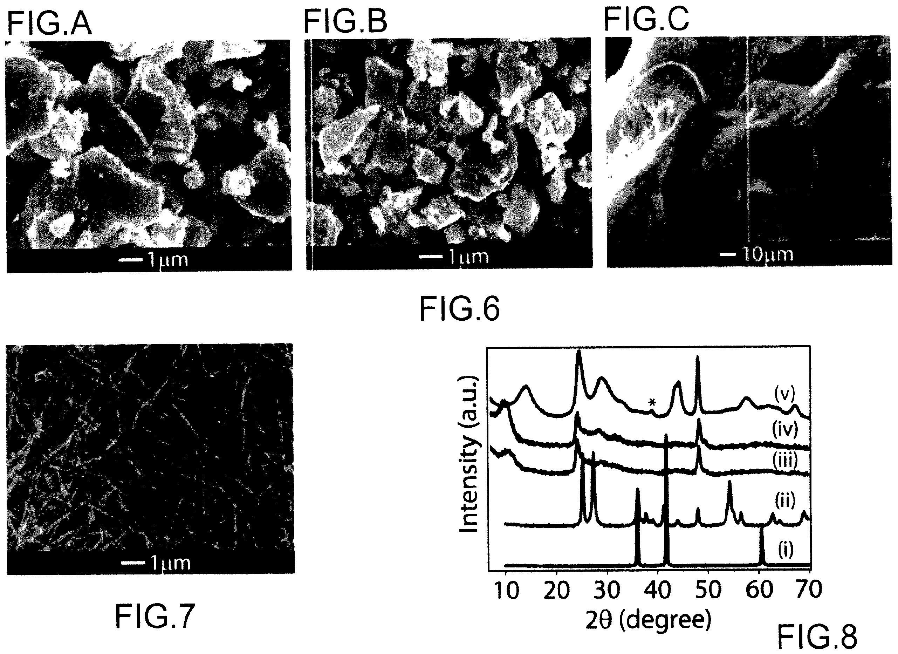

FIG.6

FIG.7

FIG.8

Intensity (a.u.)

2θ (degree)

(i) (ii) (iii) (iv) (v)

10μm

1μm

1μm

1μm

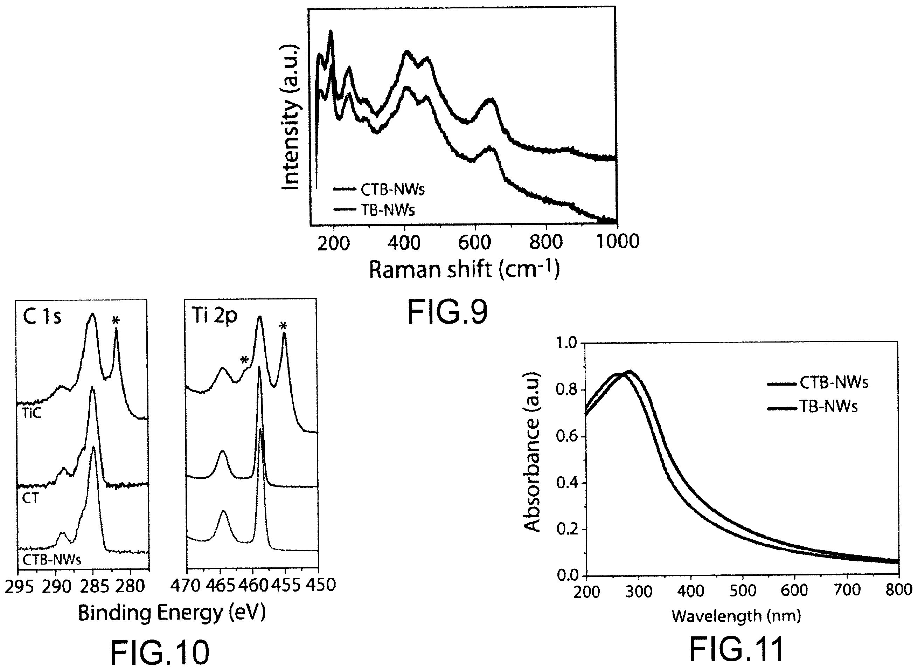

FIG.9

FIG.10

FIG.11

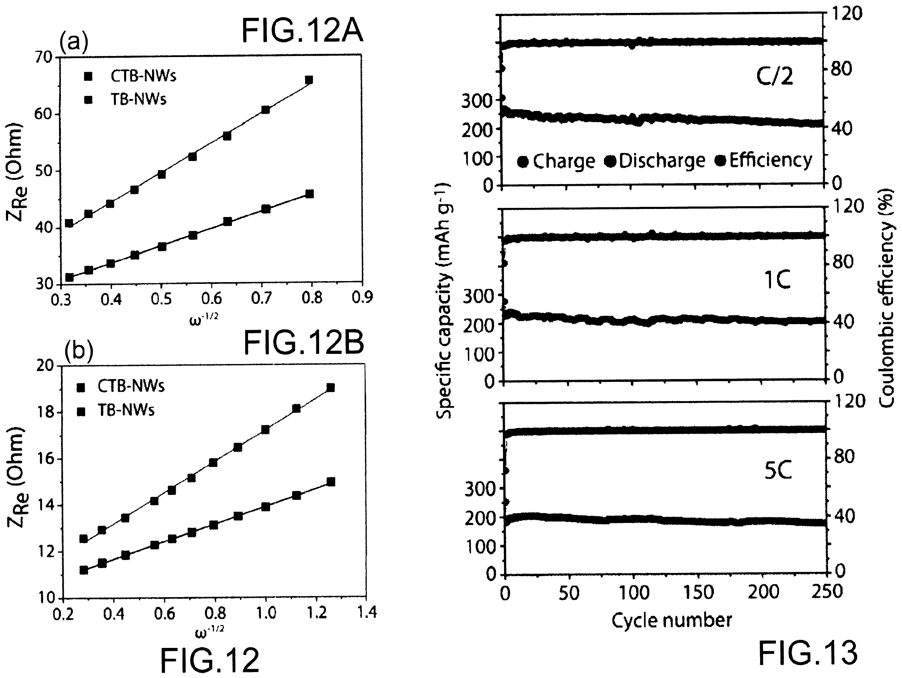

FIG.13

FIG.12A

FIG.12B

FIG.12

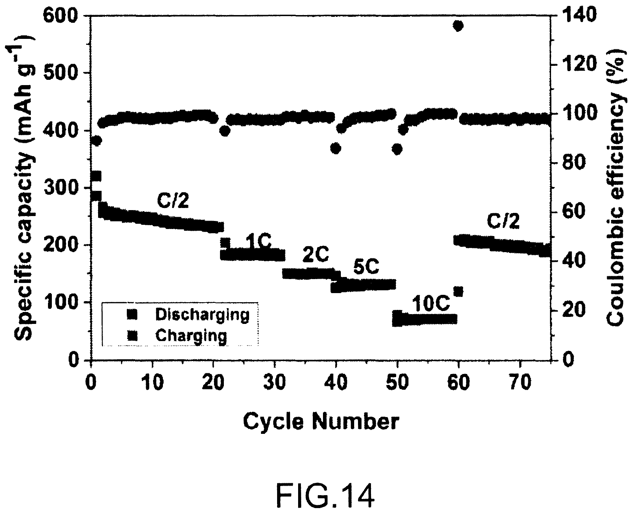

FIG.14

EP 3 371 104 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRUCE, P. G. ; SCROSATI, B. ; TARASCON, J.-M.** Nanomaterials for Rechargeable Lithium Batteries. *Angew. Chem. Int. Ed.,* 2008, vol. 47, 2930-2946
- **ARAVINDAN, V. ; LEE, Y.-S. ; MADHAVI, S.** Research Progress on Negative Electrodes for Practical Li-Ion Batteries: Beyond Carbonaceous Anodes. *Adv. Energy Mater.,* 2015, 1402225
- **GORIPARTI, S. ; MIELE, E. ; DE ANGELIS, F. ; DI FABRIZIO, E. ; PROIETTI ZACCARIA, R. ; CAPIGLIA, C.** Review on Recent Progress of Nanostructured Anode Materials for Li-ion batteries. *J. Power Sources,* 2014, vol. 257, 421-443
- **BAVYKIN, D. V. ; FRIEDRICH, J. M. ; WALSH, F. C.** Protonated Titanates and TiO2 Nanostructured Materials: Synthesis, Properties, and Applications. *Adv. Mater.,* 2006, vol. 18, 2807-2824
- **ZHU, G.-N. ; WANG, Y.-G. ; XIA, Y.-Y.** Ti-based Compounds as Anode Materials for Li-ion Batteries. *Energy & Environ. Sci.,* 2012, vol. 5, 6652-6667
- **DJENIZIAN, T. ; HANZU, I. ; KNAUTH, P.** Nanostructured Negative Electrodes Based on Titania for Li-ion Microbatteries. *J. Mater. Chem.,* 2011, vol. 21, 9925-9937
- **REN, H. ; YU, R. ; WANG, J. ; JIN, Q. ; YANG, M. ; MAO, D. ; KISAILUS, D. ; ZHAO, H. ; WANG, D.** Multishelled TiO2 Hollow Microspheres as Anodes with Superior Reversible Capacity for Lithium Ion Batteries. *Nano Letters,* 2014, vol. 14, 6679-6684
- **ETACHERI, V. ; YOUREY, J. E. ; BARTLETT, B. M.** Chemically Bonded TiO2-Bronze Nanosheet/Reduced Graphene Oxide Hybrid for High-Power Lithium Ion Batteries. *ACS Nano,* 2014, vol. 8, 1491-1499
- **LI, W. ; WANG, F. ; LIU, Y. ; WANG, J. ; YANG, J. ; ZHANG, L. ; ELZATAHRY, A. A. ; AL-DAHYAN, D. ; XIA, Y. ; ZHAO, D.** General Strategy to Synthesize Uniform Mesoporous Ti02/Graphene/Mesoporous TiO2 Sandwich-Like Nanosheets for Highly Reversible Lithium Storage. *Nano Letters,* 2015, vol. 15, 2186-2193
- **SCROSATI, B. ; GARCHE, J.** Lithium batteries: Status, Prospects and Future. *J. Power Sources,* 2010, vol. 195, 2419-2430

- **HAN, H. ; SONG, T. ; LEE, E.-K. ; DEVADOSS, A. ; JEON, Y. ; HA, J. ; CHUNG, Y.-C. ; CHOI, Y.-M. ; JUNG, Y.-G. ; PAIK, U.** Dominant Factors Governing the Rate Capability of a TiO2 Nanotube Anode for High Power Lithium Ion Batteries. *ACS Nano,* 2012, vol. 6, 8308-8315
- **KIM, T.-H. ; PARK, J.-S. ; CHANG, S. K. ; CHOI, S. ; RYU, J. H. ; SONG, H.-K.** The Current Move of Lithium Ion Batteries Towards the Next Phase. *Adv. Energy Mater.,* 2012, vol. 2, 860-872
- **LUX. S. F ; SCHAPPACHER. F ; BALDUCCI. A ; PASSERINI. S.** Low Cost, Environmentally Benign Binders for Lithium-Ion Batteries. *J. Electrochem. Soc,* 2010, vol. 157, A320-A325
- **ARMSTRONG, A. R. ; ARMSTRONG, G. ; CANALES, J. ; GARCIA, R. ; BRUCE, P. G.** Lithium-Ion Intercalation into TiO2-B Nanowires. *Adv. Mater.,* 2005, vol. 17, 862-865
- **MADEJ, E. ; LA MANTIA, F. ; SCHUHMANN, W. ; VENTOSA, E.** Impact of the Specific Surface Area on the Memory Effect in Li-Ion Batteries: The Case of Anatase TiO2. *Adv. Energy Mater.,* 2014, vol. 4, 1400829
- **XIN, X. ; ZHOU, X. ; WU, J. ; YAO, X. ; LIU, Z.** Scalable Synthesis of TiO2/Graphene Nanostructured Composite with High-Rate Performance for Lithium Ion Batteries. *ACS Nano,* 2012, vol. 6, 11035-11043
- **WANG, W. ; TIAN, M. ; ABDULAGATOV, A. ; GEORGE, S. M. ; LEE, Y.-C. ; YANG, R.** Three-Dimensional Ni/TiO2 Nanowire Network for High Areal Capacity Lithium Ion Microbattery Applications. *Nano Letters,* 2012, vol. 12, 655-660
- **QIU, J. ; ZHANG, P. ; LING, M. ; LI, S. ; LIU, P. ; ZHAO, H. ; ZHANG, S.** Photocatalytic Synthesis of TiO2 and Reduced Graphene Oxide Nanocomposite for Lithium Ion Battery. *ACS Appl. Mater. Interfaces,* 2012, vol. 4, 3636-3642
- **DYLLA, A. G. ; HENKELMAN, G. ; STEVENSON, K. J.** Lithium Insertion in Nanostructured TiO2(B) Architectures. *Acc. Chem. Res.,* 2013, vol. 46, 1104-1112
- **ARMSTRONG, A. R. ; ARMSTRONG, G. ; CANALES, J. ; BRUCE, P. G.** TiO2-B Nanowires. *Angewandte Chemie International Edition. Angew. Chem. Int. Ed.,* 2004, vol. 43, 2286-2288

- **BRUTTI, S. ; GENTILI, V. ; MENARD, H. ; SCROSATI, B. ; BRUCE, P. G.** TiO2-(B) Nanotubes as Anodes for Lithium Batteries: Origin and Mitigation of Irreversible Capacity. *Adv. Energy Mater.,* 2012, vol. 2, 322-327
- **ALDON, L. ; KUBIAK, P. ; PICARD, A. ; JUMAS, J. C. ; OLIVIER-FOURCADE, J.** Size Particle Effects on Lithium Insertion into Sn-doped TiO2 Anatase. *Chem. Mater.,* 2006, vol. 18, 1401-1406
- **LI, J. ; WAN, W. ; ZHOU, H. ; LI, J. ; XU, D.** Hydrothermal Synthesis of TiO2(B) Sanowires with Ultrahigh Surface Area and Their Fast Charging and Discharging Properties in Li-ion Batteries. *Chem. Commun.,* 2011, 3439-3441
- **ZUKALOVÁ, M. ; KALBÁČ, M. ; KAVAN, L. ; EXNAR, I. ; GRAETZEL, M.** Pseudocapacitive Lithium Storage in TiO2(B). *Chem. Mater.,* 2005, vol. 17, 1248-1255
- **TAKAMI, N. ; HARADA, Y. ; IWASAKI, T. ; HOSHINA, K. ; YOSHIDA, Y.** Micro-size Spherical TiO2(B) Secondary Particles as Anode Materials for High-power and Long-life Lithium-ion Batteries. *J. Power Sources,* 2015, vol. 273, 923-930
- **JI, L. ; LIN, Z. ; ALCOUTLABI, M. ; ZHANG, X.** Recent Developments in Nanostructured Anode Materials for Rechargeable Lithium-ion Batteries. *Energy & Environ. Sci.,* 2011, vol. 4, 2682-2699
- **OKUMURA, T. ; FUKUTSUKA, T. ; YANAGIHARA, A. ; ORIKASA, Y. ; ARAI, H. ; OGUMI, Z. ; UCHIMOTO, Y.** Nanosized Effect on Electronic/Local Structures and Specific Lithium-Ion Insertion Property in TiO2-B Nanowires Analyzed by X-ray Absorption Spectroscopy. *Chem. Mater.,* 2011, vol. 23, 3636-3644
- **LÓPEZ, M. C. ; ORTIZ, G. F. ; GONZÁLEZ, J. R. ; ALCÁNTARA, R. ; TIRADO, J. L.** Improving the Performance of Titania Nanotube Battery Materials by Surface Modification with Lithium Phosphate. *ACS Appl.Mater. Interfaces,* 2014, vol. 6, 5669-5678
- **WANG, X. ; LI, Z. ; SHI, J. ; YU, Y.** One-Dimensional Titanium Dioxide Nanomaterials: Nanowires, Nanorods, and Nanobelts. *Chem. Rev.,* 2014, vol. 114, 9346-9384
- **TIAN, J. ; ZHAO, Z. ; KUMAR, A. ; BOUGHTON, R. I. ; LIU, H.** Recent Progress in Design, Synthesis, and Applications of One-dimensional TiO2 Nanostructured Surface Heterostructures: a Review. *Chem. Soc. Rev.,* 2014, vol. 43, 6920-6937
- **BRESSER. D ; PAILLARD. E ; BINETTI. E ; KRUEGER. S ; STRICCOLI. M ; WINTER. M.** Passerini. S. Percolating Networks of TiO2 Nanorods and Carbon for High Power Lithium Insertion Electrodes. *J. Power sources,* 2012, vol. 206, 301-309
- **WANG, Q. ; WEN, Z. ; LI, J.** Solvent-Controlled Synthesis and Electrochemical Lithium Storage of One-Dimensional TiO2 Nanostructures. *Inorg. Chem.,* 2006, vol. 45, 6944-6949
- **LEE, S. ; HA, J. ; CHOI, J. ; SONG, T. ; LEE, J. W. ; PAIK, U.** 3D Cross-Linked Nanoweb Architecture of Binder-Free TiO2 Electrodes for Lithium Ion Batteries. *ACS Appl. Mater. Interfaces,* 2013, vol. 5, 11525-11529
- **LI, X. ; ZHANG, Y. ; LI, T. ; ZHONG, Q. ; LI, H. ; HUANG, J.** Graphene Nanoscrolls Encapsulated TiO2 (B) Nanowires for Lithium Storage. *J. Power Sources,* 2014, vol. 268, 372-378
- **ZHEN, M. ; GUO, S. ; GAO, G. ; ZHOU, Z. ; LIU, L.** TiO2-B Nanorods on Reduced Graphene Oxide as Anode Materials for Li ion Batteries. *Chem. Commun.,* 2015, 507-510
- **GIANNUZZI, R. ; MANCA, M. ; DE MARCO, L. ; BELVISO, M. R. ; CANNAVALE, A. ; SIBILLANO, T. ; GIANNINI, C. ; COZZOLI, P. D. ; GIGLI, G.** Ultrathin TiO2(B) Nanorods with Superior Lithium-Ion Storage Performance. *ACS Appl. Mater. Interfaces,* 2014, vol. 6, 1933-1943
- **JAE-HUN, J. ; DONG-WON, J. ; EUN, W. S. ; EUN-SUOK, OH.** Boron-doped TiO2 Anode Materials for High-Rate Lithium Ion Batteries. *J. Alloy Comp.,* 2014, vol. 604, 226-232
- **KYEREMATENG, N. A. ; VACANDIO, F. ; SOUGRATI, M. T. ; MARTINEZ, H. ; JUMAS, J. C. ; KNAUTH, P. ; DJENIZIAN, T.** Effect of Sn-doping on The Electrochemical Behaviour of TiO2 Nanotubes as Potential Negative Electrode Materials for 3D Li-ion Micro Batteries. *J. Power Sources,* 2013, vol. 224, 269-277
- **THI, T. V. ; RAI, A. K. ; GIM, J. ; KIM, S. ; KIM, J.** Effect of Mo6+ Doping on Electrochemical Performance of Anatase TiO2 as a High Performance Anode Material for Secondary Lithium-ion Batteries. *J. Alloys. Compd.,* 2014, vol. 598, 16-22
- **BI, Z. ; PARANTHAMAN, M. P. ; GUO, B. ; UNOCIC, R. R. ; MEYER III, H. M. ; BRIDGES, C. A. ; SUN, X.-G. ; DAI, S.** High Performance Cr, N-codoped Mesoporous TiO2 Microspheres for Lithium-ion Batteries. *J. Mater. Chem. A,* 2014, vol. 2, 1818-1824
- **WANG, Y. ; SMARSLY, B. M. ; DJERDJ, I.** Niobium Doped TiO2 with Mesoporosity and Its Application for Lithium Insertion. *Chem. Mater.,* 2010, vol. 22, 6624-6631
- **ZHANG, W. ; ZHOU, W. ; WRIGHT, J. H. ; KIM, Y. N. ; LIU, D. ; XIAO, X.** Mn-Doped TiO2 Nanosheet-Based Spheres as Anode Materials for Lithium-Ion Batteries with High Performance at Elevated Temperatures. *ACS Appl. Mater. Interfaces,* 2014, vol. 6, 7292-7300
- **ANDRIAMIADAMANANA, C. ; LABERTY-ROBERT, C. ; SOUGRATI, M. T. ; CASALE, S. ; DAVOISNE, C. ; PATRA, S. ; SAUVAGE, F.** Room-Temperature Synthesis of Iron-Doped Anatase TiO2 for Lithium-Ion Batteries and Photocatalysis. *Inorg. Chem.,* 2014, vol. 53, 10129-10139

- **ZHANG, W. ; GONG, Y. ; MELLOTT, N. P. ; LIU, D. ; LI, J.** Synthesis of Nickel Doped Anatase Titanate as High Performance Anode Materials for Lithium Ion Batteries. *J. Power Sources,* 2015, vol. 276, 39-45
- **JIAO, W. ; LI, N. ; WANG, L. ; WEN, L. ; LI, F. ; LIU, G. ; CHENG, H.-M.** High-rate Lithium Storage of Anatase TiO2 Crystals Doped with Both Nitrogen and Sulfur. *Chem. Commun.,* 2013, 3461-3463
- **KIM, J.-G. ; SHI, D. ; KONG, K.-J. ; HEO, Y.-U. ; KIM, J. H. ; JO, M. R. ; LEE, Y. C. ; KANG, Y.-M. ; DOU, S. X.** Structurally and Electronically Designed TiO2Nx Nanofibers for Lithium Rechargeable Batteries. *ACS Appl. Mater. Interfaces,* 2013, vol. 5, 691-696
- **LI, Y. ; WANG, Z. ; LV, X.-J.** N-doped TiO2 Nanotubes/N-doped Graphene Nanosheets Composites as High Performance Anode Materials in Lithium-ion Battery. *J. Mater. Chem.A,* 2014, vol. 2, 15473-15479
- **GROSJEAN, R. ; FEHSE, M. ; PIGEOT-REMY, S. ; STIEVANO, L. ; MONCONDUIT, L. ; CASSAIGNON, S.** Facile Synthetic Route Towards Nanostructured Fe-TiO2(B), Used as Negative Electrode for Li-ion Batteries. *J. Power Sources,* 2015, vol. 278, 1-8
- **LI, J. ; YANG, D. ; ZHU, X. ; WANG, L. ; UMAR, A. ; SONG, G.** Preparation and Electrochemical Characterization of Sn–Doped TiO2(B) Nanotube as an Anode Material for Lithium-Ion Battery. *Sci. Adv. Mater.,* 2015, vol. 7, 821-826
- **ZHANG, Y. ; FU, Q. ; XU, Q. ; YAN, X. ; ZHANG, R. ; GUO, Z. ; DU, F. ; WEI, Y. ; ZHANG, D. ; CHEN, G.** Improved Electrochemical Performance of Nitrogen Doped TiO2-B Nanowires as Anode Materials for Li-ion batteries. *Nanoscale,* 2015, vol. 7, 12215-12224
- **WU, X. ; YIN, S. ; DONG, Q. ; GUO, C. ; LI, H. ; KIMURA, T. ; SATO, T.** Synthesis of High Visible Light Active Carbon Doped TiO2 Photocatalyst by a Facile Calcination Assisted Solvothermal Method. *Appl. Catalysis B: Environ.,* 2013, vol. 142-143, 450-457
- **LI, N. ; ZHANG, X. ; ZHOU, W. ; LIU, Z. ; XIE, G. ; WANG, Y. ; DU, Y.** High Quality Sulfur-doped Titanium Dioxide Nanocatalysts with Visible Light Photocatalytic Activity From Non-hydrolytic Thermolysis Synthesis. *Inorg. Chem. Frontiers,* 2014, vol. 1, 521-525
- **SUN, J. ; XIAO, L. ; JIANG, S. ; LI, G. ; HUANG, Y. ; GENG, J.** Fluorine-Doped SnO2@Graphene Porous Composite for High Capacity Lithium-Ion Batteries. *Chem. Mater.,* 2015, vol. 27, 4594-4603
- **CHENG, C. ; SUN, Y.** Carbon Doped TiO2 Nanowire Arrays with Improved Photoelectrochemical Water Splitting Performance. *Appl. Surf. Sci.,* 2012, vol. 263, 273-276
- **KIRAN, V. ; SAMPATH, S.** Enhanced Raman Spectroscopy of Molecules Adsorbed on Carbon-Doped TiO2 Obtained from Titanium Carbide: A Visible-Light-Assisted Renewable Substrate. *ACS Appl. Mater. Interfaces,* 2012, vol. 4, 3818-3828
- **GU, D.-E. ; LU, Y. ; YANG, B.-C. ; HU, Y.-D.** Facile Preparation of Micro-mesoporous Carbon-doped TiO2 Photocatalysts with Anatase Crystalline Walls Under Template-free Condition. *Chem. Commun.,* 2008, 2453-2455
- **YU, J. ; DAI, G. ; XIANG, Q. ; JARONIEC, M.** Fabrication and Enhanced Visible-Light Photocatalytic Activity of carbon self-doped TiO2 sheets with exposed {001} facets. *J.Mater. Chem.,* 2011, vol. 21, 1049-1057
- **ZHANG, Y. ; ZHAO, Z. ; CHEN, J. ; CHENG, L. ; CHANG, J. ; SHENG, W. ; HU, C. ; CAO, S.** C-doped Hollow TiO2 Spheres: in Situ Synthesis, Controlled Shell Thickness, and Superior Visible-Light Photocatalytic Activity. *Appl. Catalysis B: Environ.,* 2015, vol. 165, 715-722
- **YE, C. ; XUANKE, L. ; YUN, Q. ; ZHIJUN, D. ; GUANMING, Y. ; ZHENGWEI, C. ; XIAOJUN, L.** Carbon-doped TiO2 Coating on Multiwalled Carbon Nanotubes with Higher Visible Light-Photocatalytic Activity. *Appl. Catal., B,* 2011, vol. 107, 128-134
- **DAVID, R.P.** Quantitative Chemical Analysis by ESCA. *J. Electron Spec. Rel. Phen.,* 1976, vol. 9, 29
- **CONG, Y. ; ZHANG, J. ; CHEN, F. ; ANPO, M.** Synthesis and Characterization of Nitrogen-Doped TiO2 Nanophotocatalyst with High Visible Light Activity. *J. Phy. Chem. C,* 2007, vol. 111, 6976-6982
- **SHAO, G.-S. ; ZHANG, X.-J. ; YUAN, Z.-Y.** Preparation and Photocatalytic Activity of Hierarchically Mesoporous-macroporous TiO2-xNx. *Appl. Catalysis B: Environ.,* 2008, vol. 82, 208-218
- **ZHANG, L. ; TSE, M. S. ; TAN, O. K. ; WANG, Y. X. ; HAN, M.** Facile Fabrication and Characterization of Multi-type Carbon-doped TiO2 for Visible Light-activated Photocatalytic Mineralization of Gaseous Toluene. *J. Mater. Chem. A,* 2013, vol. 1, 4497-4507
- **YEONGSOO, C.** Fabrication and Characterization of C-doped Anatase TiO2 Photocatalysts. *J. Mater. Sci.,* 2004, vol. 39, 1837-1839
- **JINWEI, X. ; YUNFEI, W. ; ZONGHUI, L. ; ZHANG, W.F.** Preparation and Electrochemical Properties of Carbon-doped TiO2 Nanotubes as an Anode Material for Lithium-ion Batteries. *J.Power Sources,* 2008, vol. 175, 903-908
- **ARMSTRONG, A. R. ; ARMSTRONG, G. ; CANALES, J. ; BRUCE, P. G.** TiO2-B Nanowires as Negative Electrodes for Rechargeable Lithium Batteries. *J. Power Sources,* 2005, vol. 146, 501-506

- **REDDY, M. V. ; JOSE, R. ; TENG, T. H. ; CHOWDARI, B. V. R. ; RAMAKRISHNA, S.** Preparation and Electrochemical Studies of Electrospun TiO2 Nanofibers and Molten Salt Method Nanoparticles. *Electrochim. Acta,* 2010, vol. 55, 3109-3117
- **REDDY, M. V. ; MADHAVI, S. ; SUBBA RAO, G. V. ; CHOWDARI, B. V. R.** Metal oxyfluorides TiOF2 and NbO2F as anodes for Li-ion batteries. *J. Power Sources,* 2006, vol. 162, 1312-1321
- **LEVI, M. D. ; AURBACH, D.** Impedance of a Single Intercalation Particle and of NonHomogeneous, Multilayered Porous Composite Electrodes for Li-ion Batteries. *J. Phy. Chem. B,* 2004, vol. 108, 11693-11703
- **ZHANG, Z. ; ZHOU, Z. ; NIE, S. ; WANG, H. ; PENG, H. ; LI, G. ; CHEN, K.** Flower-like Hydrogenated TiO2(B) Nanostructures as Anode Materials for High Performance Lithium ion Batteries. *J. Power Sources,* 2014, vol. 267, 388-393
- **HE, C. ; RAISTRICK, I.D. ; HUGGINS, R.A.** *Application of A-C Techniques to the Study of Lithium Diffusion in Tungsten Trioxide Thin Films,* 1980, vol. 127, 343-350
- **HIROKI, M. ; TATSUYA, N. ; YO, K. ; MITSUHARU, T. ; YOSHIHIRO, Y.** Open-circuit Voltage Study on LiFePO4 Olivine Cathode. *J. Power Sources,* 2010, vol. 195, 6879-6883
- **BEN YAHIA, M. ; LEMOIGNO, F. ; BEUVIER, T. ; FILHOL, J.-S. ; RICHARD-PLOUET, M. ; BROHAN, L. ; DOUBLET, M.-L.** Updated References for the Structural, Electronic, and Vibrational Properties of TiO2 (B) Bulk Using First-Principles Density Functional Theory Calculations. *J. Chem. Phys.,* 2009, vol. 130, 204501
- **HARDCASTLE, F. D. ; ISHIHARA, H. ; SHARMA, R. ; BIRIS, A. S. ; PHOTOELECTROACTIVITY ; RAMAN.** Spectroscopy of Anodized Titania (TiO2) Photoactive Water-Splitting Catalysts as a Function of Oxygen-Annealing Temperature. *J. Mater. Chem.,* 2011, vol. 21, 6337
- **ARMSTRONG, A. R. ; ARMSTRONG, G. ; CANALES, J. ; BRUCE, P. G.** TiO2-B Nanowires. *Angew. Chem., Int. Ed.,* 2004, vol. 43, 2286-2288
- **GROSJEAN, R. ; FEHSE, M. ; PIGEOT-REMY, S. ; STIEVANO, L. ; MONCONDUIT, L. ; CASSAIGNON, S.** Facile Synthetic Route towards Nanostructured Fe-TiO2(B), Used as Negative Electrode for Li-Ion Batteries. *J. Power Sources,* 2015, vol. 278, 1-8
- **DYLLA, A. G. ; LEE, J. A. ; STEVENSON, K. J.** Influence of Mesoporosity on Lithium-Ion Storage Capacity and Rate Performance of Nanostructured TiO2 (B). *Langmuir,* 2012, vol. 28, 2897-2903
- **DYLLA, A. G. ; STEVENSON, K. J.** Electrochemical and Raman Spectroscopy Identification of Morphological and Phase Transformations in Nanostructured TiO2 (B). *J. Mater. Chem. A,* 2014, vol. 2, 20331-20337
- **BEUVIER, T. ; RICHARD-PLOUET, M. ; BROHAN, L.** Accurate Methods for Quantifying the Relative Ratio of Anatase and TiO2 (B) Nanoparticles. *J. Phys. Chem. C,* 2009, vol. 113, 13703-13706
- **YEONGSOO, C.** Fabrication and characterization of C-doped anatase TiO2 photocatalysts. *J. Mater. Sci.,* 2004, vol. 39, 1837-1839
- **JIAGUO, Y. ; GAOPENG, DAI. ; QUANJUN, X. ; MIETEK, J.** Fabrication and enhanced visible-light photocatalytic activity of carbon self-doped TiO2 sheets with exposed {001} facets. *J. Mater. Chem.,* 2011, vol. 21, 1049-1057
- **JINWEI, X. ; YUNFEI, W. ; ZONGHUI, L. ; ZHANG, W.F.** Preparation and electrochemical properties of carbon-doped TiO2 nanotubes as an anode material for lithium-ion batteries. *J. Power Sources,* 2008, vol. 175, 903-908
- **SUN, J. ; XIAO, L. ; JIANG, S. ; LI, G. ; HUANG, Y. ; GENG, J.** Fluorine-Doped SnO2 @Graphene Porous Composite for High Capacity Lithium-Ion Batteries. *Chem. Mater.,* 2015, vol. 27, 4594-4603
- **ZHANG, Z. ; ZHOU, Z. ; NIE, S. ; WANG, H. ; PENG, H. ; LI, G. ; CHEN, K.** Flower-like Hydrogenated TiO2(B) Nanostructures as Anode Materials for High-Performance Lithium Ion Batteries. *J. Power Sources,* 2014, vol. 267, 388-393